# EUROPEAN PATENT SPECIFICATION

(11) **EP 4 067 542 B1**
(45) Date of publication and mention of the grant of the patent: **26.07.2023**
(21) Application number: 21172710.2
(22) Date of filing: 07.05.2021
(51) Int. Cl.: D01F 6/76, D01D 1/02, C08G 77/16, D01D 5/00, D01F 9/00

(54) **METHOD FOR THE PREPARATION OF A SOL FOR THE PREPARATION OF HYBRID ORGANOSILANE FIBERS BY ELECTROSTATIC SPINNING, THE SOL PREPARED BY THIS METHOD AND HYBRID ORGANOSILANE FIBERS PREPARED BY THE ELECTROSTATIC SPINNING OF THIS SOL**
VERFAHREN ZUR HERSTELLUNG EINES SOLS ZUR HERSTELLUNG VON HYBRID-ORGANOSILAN-FASERN DURCH ELEKTROSTATISCHES SPINNEN, SOWIE DURCH DIESE METHODE HERGESTELLTE SOL UND DURCH ELEKTROSTATISCHES SPINNEN DIESES SOL HERGESTELLTEN HYBRID-ORGANOSILAN-FASERN
PROCÉDÉ DE PRÉPARATION D'UN SOL POUR LA PRÉPARATION DE FIBRES ORGANOSILANE HYBRIDES PAR FILAGE ÉLECTROSTATIQUE, LE SOL PRÉPARÉ PAR CE PROCÉDÉ ET DES FIBRES HYBRIDES D'ORGANOSILANE PREPARÉES PAR FILAGE ÉLECTROSTATIQUE DE CE SOL

(30) Priority: 31.03.2021 CZ 20210160
(43) Date of publication of application: 05.10.2022
(73) Proprietor: Technicka univerzita v Liberci, 460 01 Liberec (CZ)
(72) Inventor: Makova, Veronika, 512 51 Lomnice nad Popelkou (CZ); Holubova, Barbora, 530 03 Pardubice, Pardubicky (CZ); Kulhankova, Johana, 460 01 Liberec, Liberec XII-Stare Pavlovice (CZ)
(74) Representative: Musil, Dobroslav

(56) References cited:
- EP-A2- 2 108 718
- CN-A- 109 281 063
- HOLUBOVÁ BARBORA ET AL: "Novel chapter in hybrid materials: One-pot synthesis of purely organosilane fibers", POLYMER, ELSEVIER SCIENCE PUBLISHERS B.V, GB, vol. 190, 30 January 2020 (2020-01-30), XP086057009, ISSN: 0032-3861, DOI: 10.1016/J.POLYMER.2020.122234 [retrieved on 2020-01-30]

## Description

### Technical field

The invention relates to a method for preparing a sol for the preparation of hybrid organosilane fibers by electrostatic spinning.

### Background art

Currently, hybrid materials based on bridged organosilane with at least one aromatic nucleus in the organic part are known, e.g. 1,4 bis(triethoxysilyl)benzene; 4,4'-bis(triethoxysilyl)-1,1'-biphenyl (BTEBP), etc., which, in the form of (nano)particles, films, (nano)composites or gels, have considerable potential for application in the fields of optoelectronics [6, 7], energetics (e.g. as part of new types of lithium-ion batteries) [8, 9], filtration, medicine [10] or catalysis [11]. Their advantage is the covalent bond of Si-C in the structure of the bridged organosilane, which is a stable and strong chemical bond that allows the incorporation of a variety of organic functional groups or molecules and thus the formation of various organosilane (organosilicious) precursors.

Various excipients are currently used to prepare fibers from these materials, which would be even more suitable for the application due to their form, such as organic surfactants and/or organic polymers, which facilitate formation of fibers from organosilane sols and without which organosilane sols are considered non-spinnable in the scientific literature [12, 13, 14]. Organic surfactants used for this purpose include, e.g., cetyltrimethylamonium bromide (CTAB), polyethylene glycol)-block-poly(propylene glycol)-block-poly(ethylene glycol) (P123), Pluronic F127 hydrogel, sodium dodecyl sulfate (SDS), Triton X-100 etc.; organic polymers used for this purpose include, e.g., polyvinylpyrrolidone (PVP), polycaprolactone (PCL), polyvinyl alcohol (PVA), polyhydroxybutyrate (PHB), etc. Their disadvantage is the fact that in many cases, these are toxic substances that must be subsequently eluted or burned out from the formed structures [15], whereby their residues can remain in the structure of the prepared fibers [16, 17] and act as undesirable impurities. The removal of these substances not only prolongs and complicates the preparation of fibers, but also worsens their physicochemical and/or mechanical properties - e.g., embrittlement of the fiber material may occur, as well as etching of their surface or thermal degradation of their organic component, etc.

Publications [1, 2] disclose a method for the preparation of fibrous carrier using bridged organo-bis-silane precursors. The authors prepared nanofibers from a combination of (3-triethoxysilylpropyl) succinic anhydride (TESP-SA), 3-aminopropyltriethoxysilane (APTES), tetraethyl orthosilicate (TEOS) and methyltriethoxysilane (MTEOS) by electrostatic spinning from a needle. They used organic surfactant Triton X-100 for electrostatic spinning. The disadvantage of this process and the nanofibers prepared by it was the presence of this surfactant in the structure of the nanofibers, as a result of which these fibers were a composite material. Another disadvantage was low thermal stability of these nanofibers - only up to a temperature of 220 °C.

Publication [3] discloses a method for the preparation of pure organosilane fluorescent nanofiber membranes for the trace detection of 2,4,6-trinitrotoluene vapors. The disadvantage of the materials prepared by this method is essentially negligible content of the organic component - organo-bis-silylated precursor (10⁻⁴ mol.%), due to which these materials are markedly brittle and have uninteresting optoelectronic and biomedical properties, which substantially limits the possibilities of their real use. This process is based primarily on the very well-known and simple process of spinning of tetraethyl orthosilicate, which leads to the formation of silica fibers without a significant proportion of organic component, which would make spinning in large volumes impossible. Another disadvantage is low thermal stability of the nanofibers thus prepared - only up to a temperature of approximately 200 °C.

Publication [4] discloses preparation of fibers from a combination of (*1S*,*2S*)-cyklohexane-1,2-diamine-based organosilane and TEOS in a molar ratio of 66:34. Publication [5] of the same authors describes preparation of fibers from a combination of 1,4-bis(triethoxysilyl)benzene and TEOS at molar ratios of 25 mol.% : 75 mol.%; 33 mol.% : 67 mol.% and 43 mol.% : 57 mol.%. The disadvantage of these two processes and the nanofibers prepared by them is the low proportion of the organic component - a substantial part of these nanofibers consists of an inorganic silica (Si-O-Si) TEOS-derived matrix, which is characterized by considerable brittleness; at the same time, the product, as a dielectric, does not show interesting optoelectronic or biomedical properties, which by their nature are brought by the organic component. Another disadvantage is the low thermal stability of the material thus prepared - the first signs of decomposition occur already at a temperature of 340 °C with a maximum around 450 °C. The fibers are thus certainly stable only up to a temperature of approx. 310 °C; after exceeding this temperature limit, the first degradation changes of their material may occur. Moreover, none of these publications describes the method of concentrating sol, which is essential for the preparation of sol spinnable by electrostatic spinning. The classic methods of sol-gel chemistry are concentration by freezing or prolongation of the polycondensation time with/without elevated temperature, which, however, due to further increase and excessive interconnection of organosilane structure into the spatial network typical of layers or so-called bulk materials do not lead to sols spinnable by electrostatic spinning.

Additionally publication [18] describes an electrospinning preparation method of organosilicone fibrous membrane.

The object of the invention is to eliminate the disadvantages of the background art and to provide a method for the preparation of a sol for the preparation of hybrid organosilane fibers, which would be spinnable by electrostatic spinning without the addition of to date used excipients - organic surfactants and/or polymers.

### Literature:

1. Schramm, C.; Rinderer, B.; Tessadri, R. Synthesis and characterization of hydrophobic, ultra-fine fibers based on an organic-inorganic nanocomposite containing a polyimide functionality. Polymers and Polymer Composites 2019, 27, 268-278, doi:10.1177/0967391119832408.
2. Schramm, C.; Rinderer, B.; Tessadri, R. Synthesis and characterization of novel ultrathin polyimide fibers via sol-gel process and electrostatic spinning. Journal of Applied Polymer Science 2013, 128, 1274-1281, doi: 10.1002/app.38543.
3. Tao, S.; Li, G.; Yin, J. Fluorescent nanofibrous membranes for trace detection of TNT vapor. J. Mater. Chem. 2007, 17, 2730-2736, doi:10.1039/B618122H.
4. Makova, V.; Holubova, B.; Tetour, D.; Brus, J.; Rezanka, M.; Rysova, M.; Hodacova, J. (1S,2S)-Cyclohexane-1,2-diamine-based Organosilane Fibers as a Powerful Tool Against Pathogenic Bacteria. Polymers 2020, 12, 206, doi:1 0.3390/polym1201 0206.
5. Holubova, B.; Makova, V.; Mullerova, J.; Brus, J.; Havlickova, K.; Jencova, V.; Michalcova, A.; Kulhankova, J.; Rezanka, M. Novel chapter in hybrid materials: One-pot synthesis of purely organosilane fibers. Polymer 2020, 190, 122234, doi:10.1016/j.polymer.2020.122234.
6. Masse, P.; Vellutini, L.; Bennetau, B.; Ramin, M.A.; Fournel, F.; Blanc, L.; Dejous, C.; Rebiere, D.; Weisbecker, P.; Pillot, J.-P. Chimie douce route to novel acoustic waveguides based on biphenylene-bridged silsesquioxanes. J. Mater. Chem. 2011, 21, 14581-14586, doi:10.1039/c1jm11866h.
7. Balkus, K.J.; Pisklak, T.J.; Hundt, G.; Sibert, J.; Zhang, Y. Photoluminescent and redox active periodic mesoporous organosilicas based on 2,7-diazapyrene. Microporous Mesoporous Mat. 2008, 112, 1-13, doi:10.1016/j.micromeso.2007.05.025.
8. Weinberger, M.; Su, P.-H.; Peterlik, H.; Linden, M.; Wohlfahrt-Mehrens, M. Biphenyl-Bridged Organosilica as a Precursor for Mesoporous Silicon Oxycarbide and Its Application in Lithium and Sodium Ion Batteries. Nanomaterials 2019, 9, 754, doi:10.3390/nano9050754.
9. Ikeda, T.; Nakaoka, T.; Yamamoto, K. Synthesis, crystal structure and physicochemical properties of organic-inorganic compounds KCS-3 and KCS-4. Microporous Mesoporous Mat. 2019, 284, 16-24, doi:10.1016/j.micromeso.2019.04.010.
10. Lin, J.; Peng, C.; Ravi, S.; Siddiki, A.K.M.N.A.; ZTheng, J.; Balkus, K.J. Biphenyl Wrinkled Mesoporous Silica Nanoparticles for pH-Responsive Doxorubicin Drug Delivery. Materials 2020, 13, 1998, doi:10.3390/ma13081998.
11. Li, Y.; Keilbach, A.; Kienle, M.; Goto, Y.; Inagaki, S.; Knochel, P.; Bein, T. Hierarchically structured biphenylene-bridged periodic mesoporous organosilica. J. Mater. Chem. 2011, 21, 17338-17344, doi:10.1039/c1jm12023a.
12. Electrostatic spinning of ceramic nanofibers - ProQuest Available online: https://search.proquest.com/openview/2eec8f6e69a74493471af359d0d7465 8/1?pq-origsite=gscholar&cbl=18750&diss=y (accessed on Oct 29, 2020).
13. Kickelbick, G. Hybrid Materials: Synthesis, Characterization, and Applications; John Wiley & Sons, 2007; ISBN 978-3-527-61048-8.
14. Organic-Inorganic Hybrid Nanomaterials; Kalia, S., Haldorai, Y., Eds.; Advances in Polymer Science; Springer International Publishing, 2015; ISBN 978-3-319-13592-2.
15. Yang, Z.; Niu, Z.; Cao, X.; Yang, Z.; Lu, Y.; Hu, Z.; Han, C.C. Template Synthesis of Uniform 1D Mesostructured Silica Materials and Their Arrays in Anodic Alumina Membranes. Angewandte Chemie International Edition 2003, 42, 4201-4203, doi:10.1002/anie.200250808.
16. de Almeida, D.S.; Duarte, E.H.; Hashimoto, E.M.; Turbiani, F.R.B.; Muniz, E.C.; de Souza, P.R.; Gimenes, M.L.; Martins, L.D. Development and characterization of electrospun cellulose acetate nanofibers modified by cationic surfactant. Polymer Testing 2020, 81, 106206, doi:10.1016/j.polymertesting.2019.106206.
17. Li, G.; Zhang, Z. Synthesis of Dendritic Polyaniline Nanofibers in a Surfactant Gel. Macromolecules 2004, 37, 2683-2685, doi:10.1021/ma035891
18. CN109281063A (UNIV JIANGSU NORMAL)

### Principle of the invention

A sol (colloidal dispersion system) for the preparation of hybrid purely organosilane fibers by electrostatic spinning and a method for its preparation according to the invention will be hereinafter described and explained with reference to examples of preparation of the sol and its subsequent transformation into purely organosilane submicron fibers (i.e., fibers with a diameter in the range of 100 to 1000 nm) and microfibers (i.e. fibers with a diameter in the range of units of microns) by means of an appropriately set technique of electrostatic spinning. By the method according to the invention, the sol is prepared without the addition of any kind of surfactant or organic polymer, using an acid-catalyzed sol-gel method, which ends at the sol stage and during which at least one precursor based on bridged organosilane is used with the following structure: (RO)₃-Si-organic molecule-Si-(OR)₃, where the (-OR) group preferably represents methoxy, ethoxy, isopropoxy, or butoxy groups, whereby an organic molecule may have the following structure:
- an aliphatic structure containing single bonds (e.g. *N,N*'-bis[(3-trimethoxysilyl)propyl]ethylendiamine) or *N,N'-*bis(3-(triethoxysilyl)-propyl)oxamide (OBA));
- an aliphatic structure containing multiple bonds (double, triple or a combination thereof) (e.g. bis(3-triethoxysilyl)ethyne);
- a cyclic structure (e.g. (*1S,2S*)-1,2-bis{N'-[3-(triethoxysilyl)propyl]ureido}cyklohexane);
- a heterocyclic structure containing in its molecule at least one of the following heteroatoms S, N, P or O (e.g. 2,7-bis(triethoxysilyl)acridone (BTEAD), 2,5-bis (triethoxysilyl)thiophene (BTET), or bis(3-(triethoxysilyl)propyl)pyridine-2,6-dicarboxamide (BTEPDA);
- an aromatic structure, with at least one or more aromatic nuclei (e.g. 4,4'-bis (triethoxysilyl)-1 ,1'-biphenyl (BTEBP, organosilane), 9,10-bis(triethoxysilyl) anthracene, or 4,4-bis(triethoxysilyl)terphenyl (BTEB);
- any combination of the above structures within an organic molecule, either alone or preferably in combination with at least one alkoxide precursor, such as a silicon-based alkoxide precursor, namely, e.g., tetraethylorthosilicate (TEOS, silane) or tetramethylorthosilicate (TMOS, silane), a titanium-based alkoxide precursor, namely, e.g., titanium tetraisopropoxide (IPTI) or tetrabutyl orthotitanate, or zirconium-based alkoxide precursor, namely, e.g., zirconium ethoxide or zirconium propoxide (PZrl).

When combining at least one precursor based on bridged organosilane and at least one alkoxide precursor, these materials are homogeneously mixed at room temperature on a molecular level at any molar ratio as required in the range of precursor: alkoxide(s) 99.9 mol.% : 0.1 mol.% to 0.1 mol.% : 99.9 mol.% with an alcohol-based polar solvent, preferably ethanol, isopropyl alcohol, etc. In this case, the molar ratio *Alc,* i.e., the molar ratio of the alcohol-based polar solvent to the mixture of the precursor/precursors based on bridged organosilane and the alkoxide precursor/precursors, is in the range of 17 to 90.

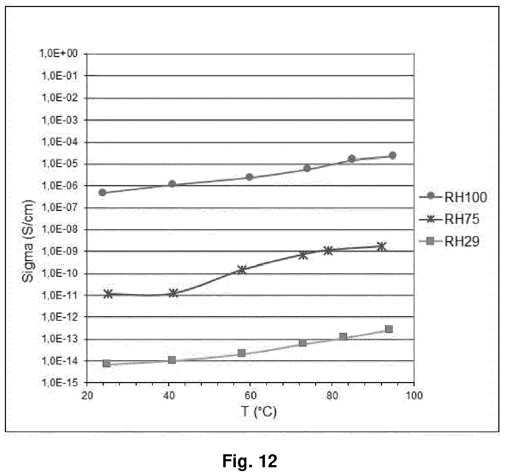

In a preferred variant of embodiment is the molar ratio of the presursor/precursors based on bridged organosilane : the alkoxide presursor/precursors from 25 mol.% : 75 mol.% to 99.9 mol.% : 0,1 mol.%, more preferably 70 mol % : 99,1 mol. %, since from the presence of the precursor/precursors based on bridged organosilane 25 mol.% and above there are unexpected abrupt changes in the physicochemical properties of the subsequently prepared fibers, especially their electrical conductivity, optical activity or biocompatibility, amounting to 5 to 15 %, which can be attributed to reduced effect of the inorganic component. The electrical conductivity of fibers already with the presence of the precursor(s) based on bridged organosilane from 25 mol. % exceeds the limit of semiconductor - i.e., 10⁻¹⁰ S/cm (see Fig. 12), which significantly increases their potential for application. When the precursor/precursors based on bridged organosilane containing aromatic functional groups or conjugated multiple bonds are present, new localized levels are created in the so-called forbidden band of the electronic structure, reducing the jump energy of the electron from the valence band into the conduction band. Using these new levels, the electron then moves from the valence band to the conduction band using lower energy, which results in a further increase in conductivity, namely up to the band of semiconductors or conductors (of the 1st order). With a higher presence of such organosilanes in the content - above 70 mol.%, the influence of the prevailing inorganic siloxane network is significantly suppressed in favor of the conductive effect of organic molecules.

To the mixture thus obtained is then added distilled or demineralized water, which is required for the subsequent hydrolysis of the silane mixture. The molar ratio k, i.e., the molar ratio of water to the mixture of the precursor and alkoxide is in the range of 1.8 to 2.4.

Together with water or after the addition of water, at least one strong inorganic mineral acid, such as hydrochloric acid (HCl; 36%), nitric acid (HNO₃), sulphuric acid (H₂SO₄), etc., is added to the mixture. The addition of acid is small in volume and its purpose is to acidify the mixture to pH ≈ 2.

The alcohol-based polar solvent is a homogenizing agent that allows to mix originally water-immiscible precursors - both presursor/precursors based on bridged organosilane and alkoxide presursor/precursors based on silicon, titanium or zirconium - with water which is necessary for starting the hydrolysis reactions. In addition, this solvent is also important from the point of view of working with the actual precursor/precursors based on bridged organosilane. An organic molecule between the silicon atoms in the structure of the alkoxide precursor is sterically bulky and can be attractive to other organosilane molecules, while restricting the access of water molecules needed for transformation reactions. This is effectively prevented by the so-called high dilution, which is not used in sol-gel chemistry, but for the preparation of sol by the method according to the invention it is necessary. The molar excess of the alcohol-based polar solvent over the alkoxide precursor/precursors sufficiently isolates these bulky molecules, thereby preventing their clustering and branching and so these molecules can interfere with subsequent reactions.

After mixing and homogenization, the mixture thus prepared is heated, e.g., in an oil bath, to a boiling point which is, depending on the precursors and alcohol used, 85 to 95 °C, and is maintained at this temperature for 4.5 to 7.5 hours. The heating promotes and accelerates the transformation reactions already initiated in the mixture by the addition of acid (see below). In the first phase, the alkoxy groups (=Si-OR) contained in the structure of the precursor/precursors based on bridged organosilane and of the alkoxide precursor/precursors are hydrolyzed to form silanol groups (=Si-OH) (see equation 1 below). These silanol groups then polycondensate to form a three-dimensional organosilane matrix (polysiloxane bond =Si-O-Si=) (see equations 2 and 3 below), whose structure in the form of sol is filled with molecules of the used alcohol-based polar solvent, water and inorganic mineral acid, which evaporate during the subsequent electrostatic spinning process.

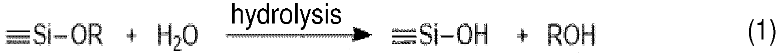

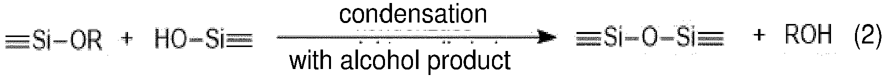

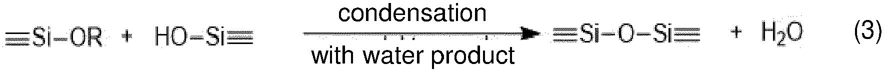

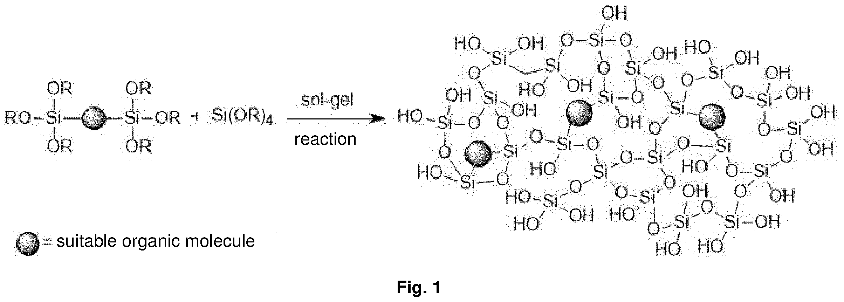

Already after the addition of the acid, transformation reactions begin (equations 1 to 3), leading to the formation of linear, lowly branched organosilane macromolecular structures - see Fig. 1, which shows a scheme of the sol-gel reaction taking place during the preparation of the sol according to the invention. In the first phase, the hydrolysis of the alkoxy groups contained in the structure of the precursor/precursors based on bridged organosilane and the alkoxide precursor/precursors (equation 1) is started, which under acidic conditions proceeds via hydrolytic reaction of S_{N}2-Si type, i.e., bimolecular nucleophilic substitution on a silicon atom, or, optionally, on a titanium or zirconium atom, in the structure of the precursors. Reaction 1 can be described in a greater detail in the following way (equation 4): Due to acidic conditions, the protonation (H⁺ approach) of the alkoxy group (-OR) of the precursors occurs in a rapid sequence, which leads to a deviation of the electron density of the central silicon atom, optionally titanium or zirconium atom, making this atom more electrophilic and at the same time more susceptible to water molecule attack. At the same time, a pentacovalent intermediate is formed. By creating this intermediate state, the positive charge on the first protonated alkoxy group is reduced, which thus becomes the so-called leaving group (in the form of the alcohol molecule ROH). The result of the hydrolysis is therefore transformation of the alkoxy groups in the structure of the precursors (=Si-OR) into silanol groups (=Si-OH) (see equations 1 and 4).

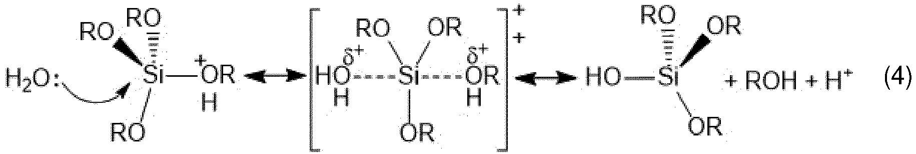

After the start of the hydrolysis, the remaining transformation reactions take place (equations 2 and 3), i.e., polycondensation with water or alcohol product. The formed silanol groups (Si-OH) immediately polycondensate (=Si-O-Si=, polysiloxane bond) and by repeating, chains of organosilane matrix are formed (see equations 2 and 3). In more detail (equation 5), this step can be described again as based on the reaction of S_{N}2-Si type, i.e., nucleophilic attack of the neutral silanol on the acid protonated silanol to form a pentacoordinate intermediate. The leaving group in this case is a protonated hydroxyl group. After the exit of the water molecule, a Si-O-Si bond is formed, which further extends and grows into a macromolecular structure, thus forming a matrix of the resulting sol.

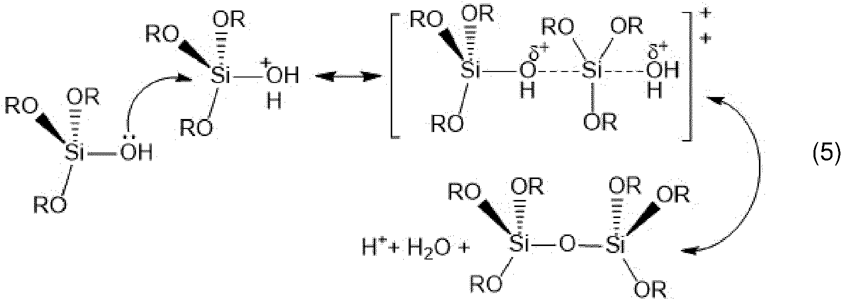

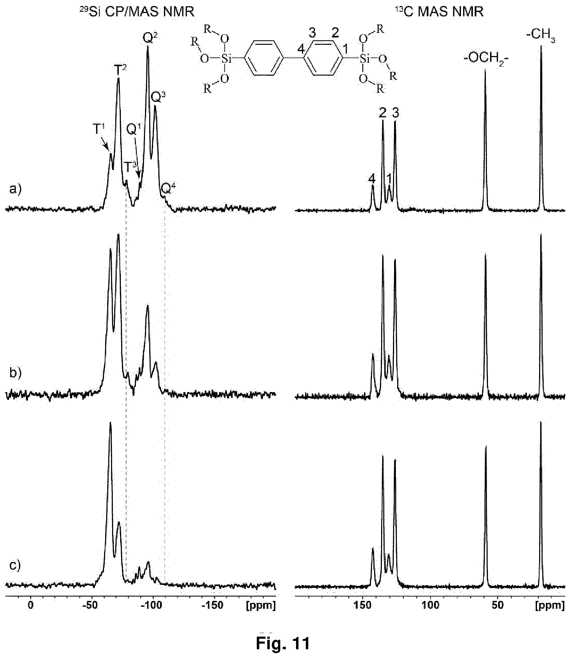

In order for the sol thus prepared to be spinnable by electrostatic spinning, it is necessary to set all the parameters of the sol-gel method appropriately so as to form linear or to form the lowest possible amount of branched organosilane macromolecular units which are characterized by incomplete polycondensation of -OH groups on the silicon atom, optionally titanium or zirconium atom, of the precursor(s) (so-called non-bridged oxygens are formed) and the resulting structure does not show crosslinking in space (see Fig. 11). For these purposes, the following parameters are therefore set:
a) Low values of the molar ratio of water *k* to the precursor/precursors (based on bridged organosilane) or to the mixture of precursors (based on bridged organosilane and alkoxide precursor/precursors) - in the range of 1.8 to 2.4. The less the system is supplied with water molecules in the hydrolysis phase, the less and the more slowly the hydrolysis takes place, whereby not all alkoxy groups are converted into silanol groups which would subsequently polycondensate to form a polysiloxane network. The molar ratio *k* = 1.8 to 2.4 thus intentionally reduces the tendency of the organosilane structure to branch and network to form complex spatial structures.
b) Acid Catalysis: In addition to the protonation of the initial precursors described above, the use of an acid catalyst is of even deeper importance. The growth of the organosilane network in the polycondensation steps is significantly influenced by the pH of the environment. In the acid-catalyzed reaction, after the formation of the siloxane bond, the acidity of the protons on the remaining silanol groups increases (instead of the original -OR and subsequently -OH groups), thus reducing the electron density on the atom of the respective central silicon, optionally titanium or zirconium, (of the alkoxide precursor/precursors). Thus, condensation occurs primarily on terminal silanols, as these are most susceptible to protonation. This results in a preferential growth of a linear or lowly branched organosilane structure suitable for the formation of fibers by electrostatic spinning.
c) Polycondensation time, mixing and temperature: The values given below were experimentally determined to be optimal for the formation of the desired sol structure described above. The course of polycondensation was checked by FTIR analysis (see below).
d) Concentration of the sol: A key parameter is to stop the growth of the organosilane matrix at a suitable moment and process the sol rapidly before the structure expands or the sol enters the gel phase. At the same time, from the point of view of spinning techniques, it is necessary to bring the sol to a state of suitable viscosity or surface tension so that it can be entrained by electric forces during electrostatic spinning. However, with concentration of the sol by freezing or prolonging the polycondensation time with/without access of air proposed by the scientific literature, the organosilane structure continues growing and thus becomes unspinnable. Therefore, in the field of electrostatic spinning, the addition of various surfactants, low molecular weight additives or viscous polymers is often used to adjust the viscosity or surface tension of the liquid being spun. Nevertheless, the disadvantage is the fact that these components remain in the resulting structure and consequently alter the resulting properties. In the method according to the invention, a controlled distillation technique is used to concentrate the sol. In this technique, after the above specified polycondensation time, the prepared sol is concentrated by classical distillation at a temperature of 110 to 120 °C (more preferred for the molar proportions of the precursor/precursors based on bridged organosilane up to 25 mol.%) or by vacuum distillation at a temperature of 70 to 80 °C, and a vacuum of 10 to 30 mbar (more preferred for higher molar proportions of the precursor/precursors based on bridged organosilane), thereby adjusting its viscosity to 30 to 60 mPa.s at a temperature of 20 °C.

The values of the sols concentration were obtained according to the following parameters: (ϕ = ([V_{D}]/[V_{C}]*100)), where ϕ is the volume percent of the sol after concentration, i.e., after ethanol has been distilled off; V_{D} is the volume of the distillate (volume of alcohol, water and acid distilled off from the sol); V_{C} is the total volume of the initial sol, i.e. of the precursor/precursors based on bridged organosilane, or, optionally, of the mixture of the precursor/precursors based on bridged organosilane and of the alkoxide precursor/precursors, water, acid and alcohol. To successfully prepare the fibers, it is necessary to have the sol concentrated in the interval from ϕ = 49.5 for 100% presence of the precursor based on the bridged organosilane in the sol to ϕ = 79.8 for 0.1% presence of the precursor based on bridged organosilane in the sol.

The concentrated sol thus obtained consists of the above-described linear, lowly branched macromolecular oraganosilane matrix, which, despite the concentration, is filled with molecules of the alcohol-based polar solvent, water and inorganic mineral acid, which evaporate during the subsequent electrostatic spinning.

When using a precursor based on bridged organosilane alone, without an alkoxide precursor, the sol preparation procedure is analogous, with the difference that molar ratio *Alc,* i.e., the molar ratio of the alcohol-based polar solvent to the precursor must be at least 90, preferably higher. This is due to the high molecular weight and higher volume of the precursor/precursors based on bridged organosilane - the higher amount of alcohol helps to homogenize the precursor/precursors based on bridged organosilane with water and acid catalyst, and thus facilitates the subsequent hydrolysis and polycondesation reactions. The other steps and parameters remain the same as in the combination of the precursor and the alkoxide(s).

In this variant, too, the concentrated sol consists of the above-described linear, lowly branched macromolecular oraganosilane matrix, which, despite the concentration, is filled with molecules of the alcohol-based polar solvent, water and inorganic mineral acid, which evaporate during the subsequent electrostatic spinning.

The advantage and uniqueness of the sol prepared in this way, but also of the fibers prepared from it, is that it does not contain/they do not contain any organic surfactant or organic polymer which are commonly used to facilitate the formation of fibers from organosilane sols and which must be subsequently removed from the structure of the prepared fibers, e.g., by burning out, washing, etc. These processes not only make the production of fibers expensive and complicate the preparation of fibers, but at the same time worsen their physicochemical or mechanical properties - they may cause, for example, embrittlement of the fibers, etching of their surface or thermal degradation of their organic part, etc.

For the spinning of the sol thus prepared, it is possible to use electrostatic spinning technology from a hollow needle with a constant supply of sol, technology of spinning from a face of a rod or the technology of the so-called needleless electrostatic spinning which is based on using a spinning electrode formed by a moving body, such as a cylinder (e.g., according to CZ 274294), or a static or moving string (e.g., according to CZ 300345). The needleless electrostatic spinning is applied, e.g., in the technology Nanospider of the Elmarco company and allows preparation of submicron fibers and microfibers on an industrial scale. The prepared organosilane fibers have diameters in the range of about 140 to 5100 nm, depending on the composition of the sol and the conditions and technology of the spinning process.

Preferably, the fibers prepared by electrostatic spinning are further also thermally stabilized, depending on the type of the alkoxide precursor/precursors used and on the molar ratio of the precursor/precursors based on bridged organosilane and the alkoxide precursor/precursors, at a temperature of 100 to 250 °C for a period of 2 to 5 hours. During stabilization, the residual alcohol and water evaporate, and more rarely also the post-condensation of Si-O-Si units within the hybrid organosilane matrix of the prepared fibers.

As is obvious to those skilled in the art, suitable conditions of the electrostatic spinning and of the fiber preparation depend especially on the sol composition and the molar ratio of the precursors in it, on the concentration, viscosity and surface tension of the sol, the temperature and humidity of the environment during electrostatic spinning, the electrostatic spinning technology used, the type of spinning electrode and collecting electrode/electrodes, the type of collector, the distance between the spinning electrode and the collecting electrode/electrodes and the voltage applied. Exemplary settings for these parameters are listed below in Examples 1 to 12. However, the person skilled in the art is able, without any difficulties, to set the parameters of the technology used for the optimal course of spinning and obtaining the desired result, based on the properties of the specific sol for spinning.

### Description of the drawings

In the enclosed drawings, Fig. 1 shows a scheme of sol-gel reaction taking place during the preparation of a sol according to the invention using 4,4'-bis(triethoxysilyl)-1,1'-biphenyl.

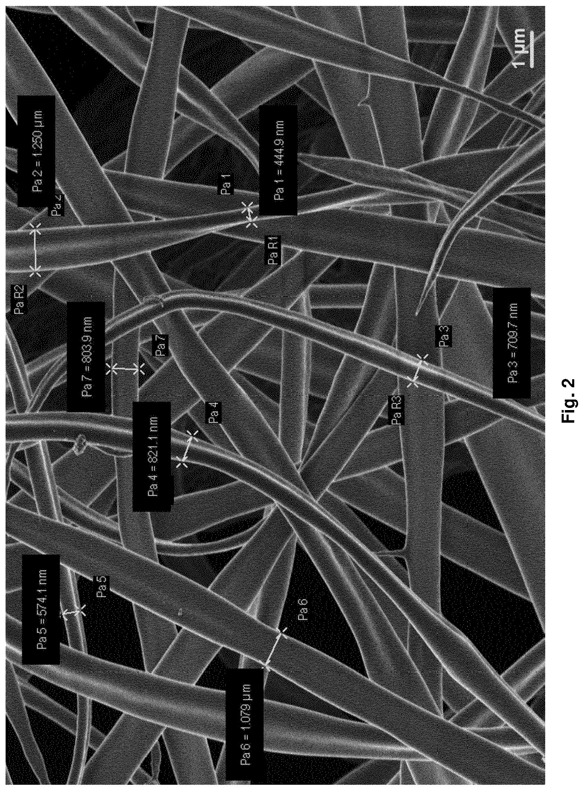

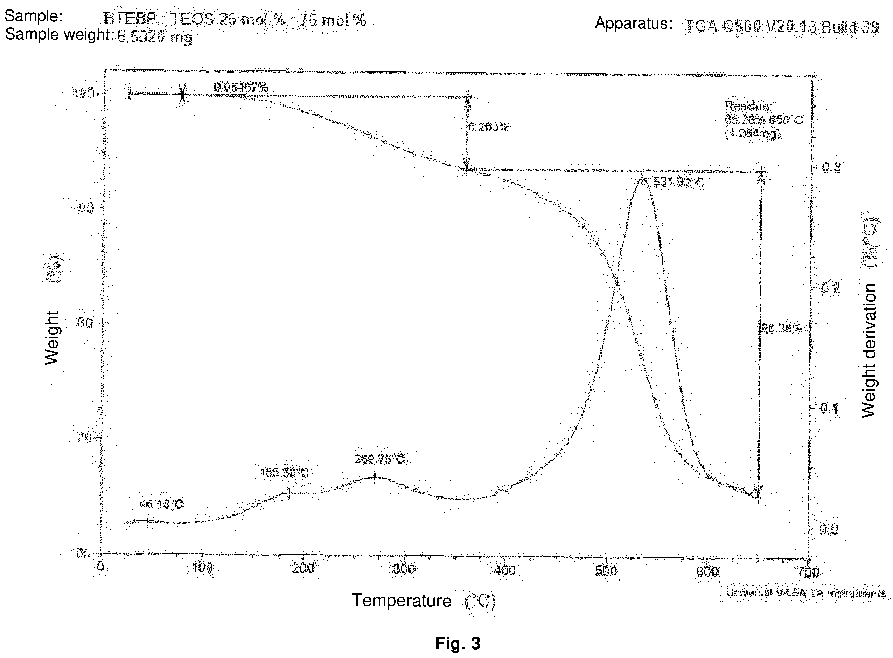

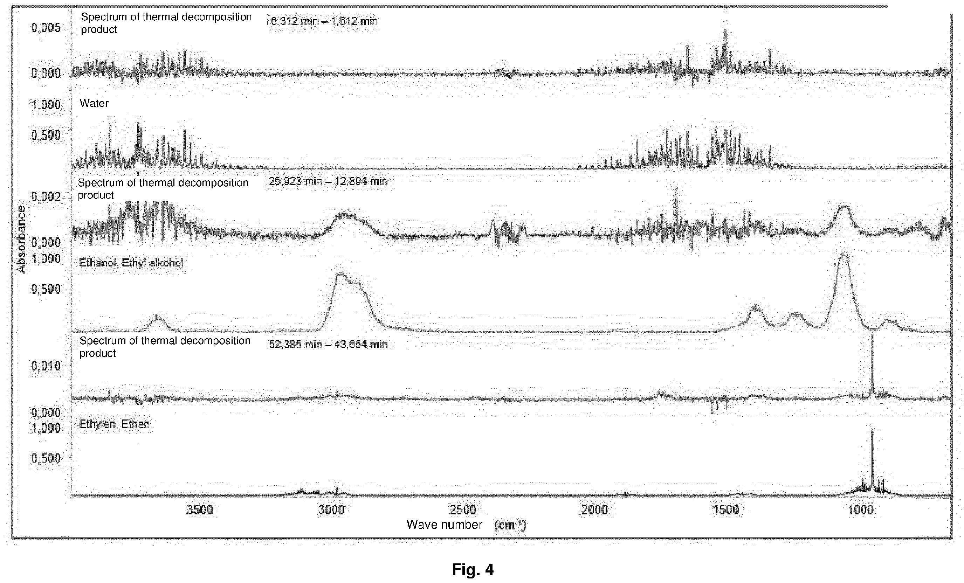

Fig. 2 shows an SEM image of the submicron organosilane fibers prepared by the electrostatic spinning of the sol according to the invention, which contained 4,4'-bis(triethoxysilyl)-1,1'-biphenyl (BTEBP) as a precursor based on bridged organosilane and tetraethylorthosilicate (TEOS) as a silicon-based alkoxide precursor with a molar ratio of BTEBP : TEOS 25 mol.% : 75 mol.%, at a magnification of 5,000 times, Fig. 3 shows TGA spectrum of the thermal decomposition of these submicron fibers in the temperature range of 25 to 650 °C, and Fig. 4 shows FTIR spectrum of gaseous products of the thermal decomposition of these submicron fibers in thermogravimetric analysis.

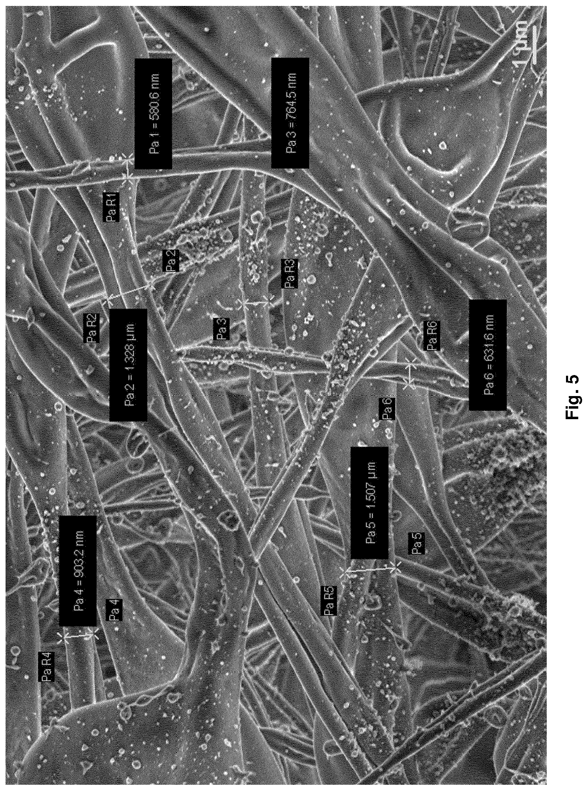

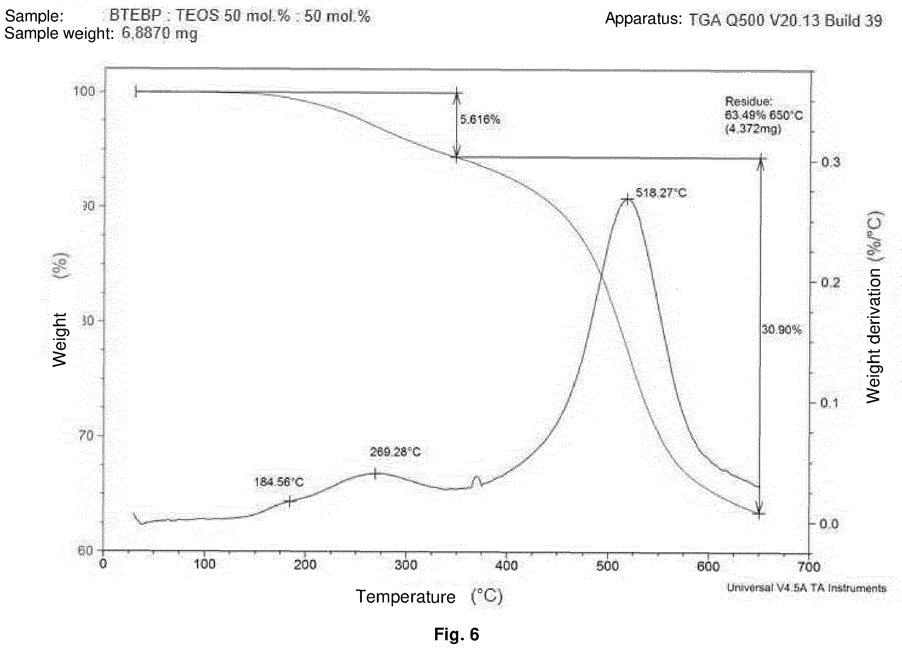

Fig. 5 shows an SEM image of the submicron organosilane fibers prepared by the electrostatic spinning of the sol according to the invention with a molar ratio of BTEBP : TEOS 50 mol.% : 50 mol.%, at a magnification of 5,000 times, and Fig. 6 shows TGA spectrum of the thermal decomposition of these submicron fibers in the temperature range of 25 to 650 °C.

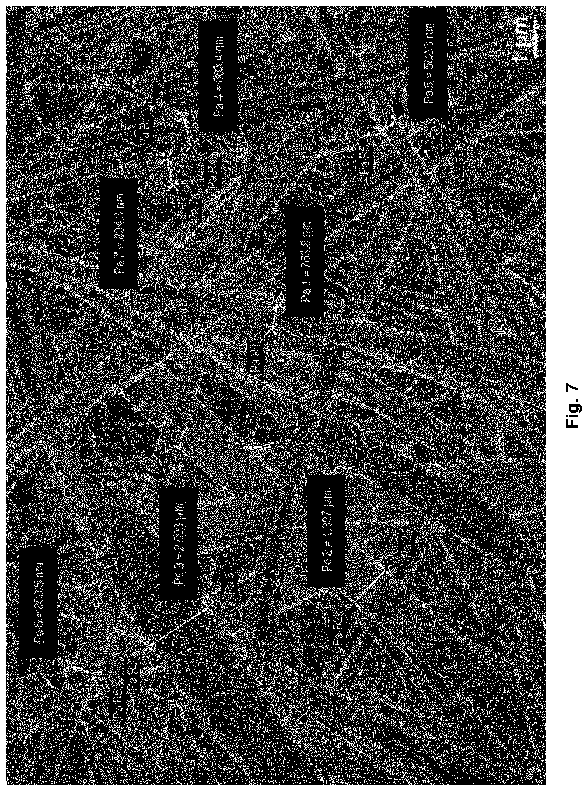

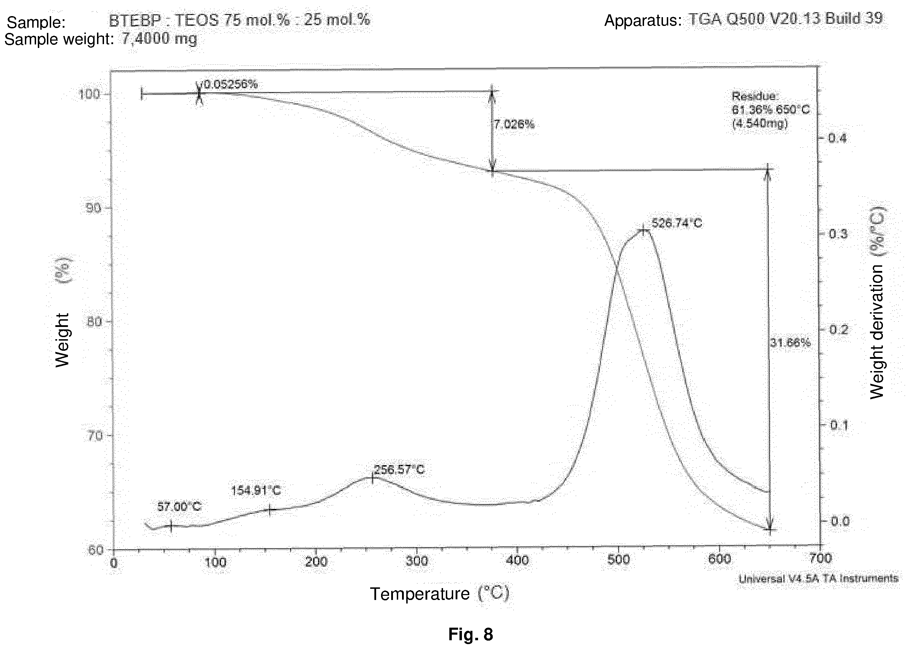

Fig. 7 shows an SEM image of the organosilane microfibers prepared by the electrostatic spinning of the sol according to the invention with a molar ratio of BTEBP : TEOS 75 mol.% : 25 mol.%, at a magnification of 5,000 times, and Fig. 8 shows TGA spectrum of the thermal decomposition of these submicron fibers in the temperature range of 25 to 650 °C.

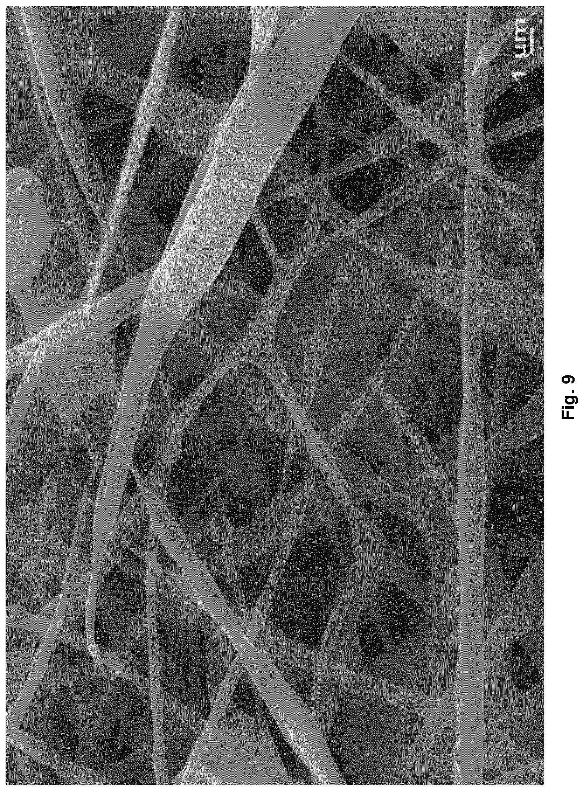

Fig. 9 is an SEM image of the organosilane microfibers prepared by the electrostatic spinning of sol according to the invention with a molar ratio of BTEBP : TEOS 90 mol.% : 10 mol.% on the device Nanospider NS 1W500U, at a magnification of 5,000 times.

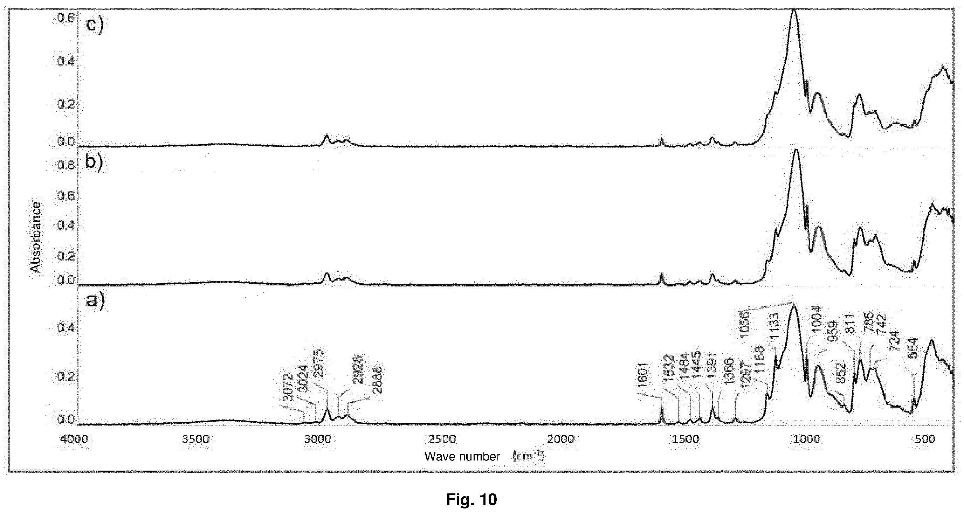

Fig. 10 shows FTIR spektra of the submicron fibers and microfibers prepared by the electrostatic spinning of the sol according to the invention in variants with a molar ratio of BTEBP : TEOS in the sol 25 mol.% : 75 mol.%, 50 mol.% : 50 mol.% and 75 mol.% : 25 mol.%, and Fig. 11 shows ssNMR spectra of the submicron fibers and microfibers prepared by the electrostatic spinning of the sol according to the invention: a) a variant with a molar ratio of BTEBP : TEOS in the sol 25 mol.% : 75 mol.%, b) a variant with a molar ratio of BTEBP : TEOS in the sol 50 mol.% : 50 mol.%, c) a variant with a molar ratio of BTEBP : TEOS in sol 75 mol.% : 25 mol.%.
Fig. 12 shows a spectrum of the dependency of the specific electrical conductivity of hybrid pure organosilane fibers with a molar ratio of BTEBP: TEOS in the sol 25 mol. % : 75 mol.% on the temperature and relative humidity of the environment.

### Examples of embodiment

The preparation of different sol variants for the preparation of hybrid organosilane fibers according to the invention and the preparation of submicron fibers and microfibers by the electrostatic spinning of these sols is illustrated by 12 examples which are given below.

### Example 1 - Preparation of submicron fibers from a sol with a molar ratio of BTEBP : TEOS 25 mol.% : 75 mol.%

A precursor based on bridged organosilane, namely 4,4'-bis(triethoxysilyl)-1,1'-biphenyl (BTEBP), a silicon alkoxide precursor, namely tetraethylorthosilicate (TEOS), and ethanol, were homogeneously mixed at room temperature under constant stirring. The molar ratio of BTEBP and TEOS was 25 mol.% : 75 mol.% and the molar ratio *Alc,* i.e. the molar ratio of ethanol to the mixture of BTEBP and TEOS (*Alc* = [EtOH]/[BTEBP + TEOS]), was 30. Subsequently, demineralized water and concentrated HCl (36%) were added one by one to the thus prepared mixture under constant stirring, whereby the molar ratio *k,* i.e. the molar ratio of water to the mixture of BTEBP and TEOS, (*k* - [H₂O]/[BTEBP + TEOS]) was 2.0, and the amount of HCl was such as to adjust the pH of the mixture thus obtained to pH ≈ 2. The mixture was continually stirred on IKA IKAMAG RCT basic magnetic stirrer at 350 rpm.

The mixture thus prepared, in which the addition of HCl had already started transformation reactions, was subsequently heated to a boiling point, which was 90 °C, and was maintained at this temperature for 6 hours. The sol formed was then concentrated by classical distillation with a water bath temperature of 120 °C, whereby its viscosity after cooling to a temperature of 20 °C was 57 mPa.s.

The sol thus prepared was used to prepare the fibers by needle-based electrostatic spinning with the following parameters: electrostatic spinning voltage 25 kV; distance of the spinning needle from the collecting electrode 15 cm; rate of extrusion of the sol from the spinning needle 3 ml/h; ambient humidity 35 %; ambient temperature 20 °C. A black A4 paper with a weight of 80 g/m² was used as the base material (collector), which was arranged on the collecting electrode and on which the formed fibers were deposited. After 180 minutes of spinning, a 9 to 12 µm thick layer of submicron organosilane fibers was prepared. This layer was then thermally stabilized in a drier at a temperature of 120 °C for a period of 2 hours.

The morphology and diameters of the organosilane fibers thus prepared were then monitored by scanning electron microscopy (SEM) - see Fig. 2, which shows an SEM image of these fibers at a magnification of 5,000 times. Their diameters ranged from 400 to 1300 nm with a mean value of 812 nm; the fibers were homogeneous and compact. Fiber diameters were measured using appropriate software at 100 different locations of one SEM image.

Afterwards, a thermal stability test of these submicron fibers in the temperature range of 20 to 650 °C was performed by thermogravimetric analysis (TGA) - see Fig. 3, which shows the TGA spectrum of their thermal decomposition. During TGA, gaseous products formed during the heating and thermal decomposition of these fibers were analyzed simultaneously by infrared spectroscopy (FTIR) - see Fig. 4, which shows the FTIR spectrum of gaseous products of thermal decomposition of these fibers. During the analysis, three weight losses were recorded: two smaller ones with a size of 0.06 wt. % or 6.23 wt. % in the temperature range of 20 to 350 °C, which correspond to the evaporation of water and the evaporation or dissociation of residual ethanol and residual ethoxy groups from an imperfectly polycondensed organosilane matrix; a larger weight loss of 28.38 wt. % was then recorded in the temperature range of 350 to 650 °C with a maximum at a temperature of 531.92 °C. This decrease was attributed on the basis of FTIR analysis to the decomposition of the organic component of the organosilane matrix. From these results, it is obvious that the prepared organosilane fibers show thermal stability up to temperatures from about 350 to 400 °C.

Furthermore, Fig. 12 shows the spectrum of the dependence of the specific electrical conductivity of these organosilane fibers on the temperature and relative humidity of the environment, from which it is obvious that the electrical conductivity of these submicron fibers exceeds the limit of semiconductor - i.e., 10⁻¹⁰ S/cm.

### Example 2 - Preparation of submicron fibers from a sol with a molar ratio of BTEBP : TEOS 50 mol.% : 50 mol.%

A precursor based on bridged organosilane, namely 4,4'-bis(triethoxysilyl)-1,1'-biphenyl (BTEBP), a silicon-based alkoxide precursor, namely tetraethylorthosilicate (TEOS), and ethanol were homogeneously mixed at room temperature under constant stirring. The molar ratio of BTEBP and TEOS was 50 mol.% : 50 mol.% and the molar ratio *Alc,* i.e., the molar ratio of ethanol to the mixture of BTEBP and TEOS, was 45. After that, distilled water and concentrated HCl (36%) were added one by one to the mixture thus prepared under constant stirring, whereby the molar ratio *k,* i.e., the molar ratio of water to the mixture of BTEBP and TEOS was 2.0, and the amount of HCl was such as to adjust the pH of the mixture thus obtained to pH ≈ 2. The mixture was continually stirred on IKA IKAMAG RCT basic magnetic stirrer at 350 rpm.

The mixture thus prepared, in which the addition of HCl had already started transformation reactions, was subsequently heated to a boiling point, which was 90 °C, and wasmaintained at this temperature for 6 hours. The sol formed was subsequently concentrated by vacuum distillation at a water bath temperature of 75 °C and a vacuum of 15 mbar, whereby its viscosity after cooling to a temperature of 20 °C was 48 mPa.s.

The sol thus prepared was used to prepare the fibers by needle-based electrostatic spinning with the following parameters: electrostatic spinning voltage 23 kV; distance of the spinning needle from the collecting electrode 20 cm; rate of extrusion of the sol from spinning needle 3 ml/h; ambient humidity 30 %; ambient temperature 20 °C. A black A4 paper with a weight of 80 g/m² was used as the base material (collector) which was arranged on the collecting electrode and on which the formed fibers were deposited. After 180 minutes of spinning, a 7 to 9 µm thick layer of submicron organosilane fibers was prepared. This layer was then thermally stabilized in a drier at a temperature of 120 °C for a period of 2 hours.

The morphology and diameters of the organosilane fibers thus prepared were then monitored by scanning electron microscopy (SEM) - see Fig. 5, which shows an SEM image of these fibers at a magnification of 5,000 times. Their diameters ranged from 580 to 1510 nm, with a mean value of 952 nm; the fibers were compact, spherical inhomogeneities were present on their surface, which, however, do not significantly affect their properties and do not limit their use in potential applications.

During the TGA-FTIR analysis, a more significant weight loss of 30.9 wt. % was observed in the temperature range 350 to 650 °C with a maximum at a temperature of 518.27 °C - see Fig. 6, which confirms the thermal stability of the submicron organosilane fibers thus prepared up to a temperature of about 400 °C.

### Example 3 - Preparation of microfibers from a sol with a molar ratio of BTEBP : TEOS 75 mol.% : 25 mol.%

A precursor based on bridged organosilane, namely 4,4'-bis(triethoxysilyl)-1,1'-biphenyl (BTEBP), a silicon-based alkoxide precursor, namely tetraethylorthosilicate (TEOS), and ethanol homogeneously mixed at room temperature under constant stirring. The molar ratio of BTEBP and TEOS was 75 mol.% : 25 mol.% and the molar ratio *Alc,* i.e., the molar ratio of ethanol to the mixture of BTEBP and TEOS was 65. P After that, distilled water and concentrated HCl (36%) were added one by one to the mixture thus prepared under constant stirring, whereby the molar ratio *k,* i.e., the molar ratio of water to the mixture of BTEBP and TEOS, was 1.96, the amount of HCl was such as to adjust the pH of the mixture thus obtained to pH ≈ 2. The mixture was continually stirred on IKA IKAMAG RCT basic magnetic stirrer at 350 rpm.

The mixture thus prepared, in which the addition of HCl had already started transformation reactions, was subsequently heated to a boiling point, which was 89 °C, and was maintained at this temperature for 6.5 hours. The sol formed was then concentrated by vacuum distillation with a water bath temperature of 70 °C and a vacuum of 15 mbar, whereby its viscosity after cooling to a temperature of 20 °C was 42 mPa.s.

The sol thus prepared was used to prepare fibers by electrostatic spinning from a face of a rod with the following parameters: electrostatic spinning voltage 35 kV; distance of the face of the rod from the collecting electrode 25 cm; ambient humidity 35 %; ambient temperature 20 °C. A black A4 paper with a weight of 80 g/m² was used as the base material (collector), which was arranged on the collecting electrode and on which the formed fibers were deposited. 300 µl of sol was applied by means of a syringe to the face of the rod with an extension having a diameter of 25 mm and an area of 490.6 mm². After 180 minutes of spinning, a 9 to 11 µm thick layer of submicron organosilane fibers was prepared. This layer was then thermally stabilized in a drier at a temperature of 120 °C for a period of 2 hours.

The morphology and diameters of the organosilane fibers thus prepared were then monitored by scanning electron microscopy (SEM) - see Fig. 7, which shows an SEM image of these microfibers at a magnification of 5,000 times. Their diameters ranged from 580 to 2100 nm, with a mean value of 1040 nm; the fibers were homogeneous and compact. Larger fiber diameters were probably caused by the steric effect of a bulky precursor based on bridged organosilane, the content of which is dominant in the organosilane matrix thus prepared. A certain role was also played by a change in the type of electrostatic spinning when needle-based electrostatic spinning with a continuous sol supply according to Examples 1 and 2 was replaced by rod electrostatic spinning. In this case, a drop of sol is spread over a larger area than in the case of extruding sol from a hollow needle. As a result, more Taylor cones are formed at the same time, from which fibers are elongated in significantly higher amounts. Also, it is possible to use a higher electrical voltage in this spinning method.

During TGA-FTIR analysis - see Fig. 8, three weight losses were recorded: two smaller losses of 0.05 wt. % and 7.03 wt. % in the temperature range of 50 to 260 °C, which correspond to the evaporation of water and the evaporation or dissociation of residual ethanol and of residual ethoxy groups from an imperfectly polycondensed organosilane matrix; a larger weight loss 31.66 hm. % was then recorded in the temperature range of 375 to 650 °C with a maximum at a temperature of 526.74 °C. This decrease was attributed to the decomposition of the organic component of the organosilane matrix based on FTIR analysis. From these results, it is obvious that the prepared organosilane microfibers exhibit thermal stability up to a temperature of approximately 400 °C.

### Further characterization of organosilane fibers

The fibers prepared in Examples 1 to 3 were further characterized by Fourier transform infrared spectroscopy - see Fig. 10, which shows the FTIR spectra of the fibers prepared by the electrostatic spinning of the sol according to the invention: a variant with a molar ratio of BTEBP : TEOS in the sol 25 mol.% : 75 mol.% according to Example 1; a variant with a molar ratio of BTEBP : TEOS in the sol 50 mol.% : 50 mol.% according to Example 2; a variant with a molar ratio of BTEBP : TEOS in the sol 75 mol.% : 25 mol.% according to Example 3. It was confirmed that these fibers have the same chemical structure with typical structural units, which correspond to the composition of the organosilane matrix containing conjugated aromatic nuclei. This fact is clearly evident in the so-called "fingerprint region", i.e., in the region of characteristic single bonds in which no two molecules have exactly the same spectrum, 950 to 1000 cm⁻¹ and 1050 to 1100 cm⁻¹, which corresponds to the characteristic vibrations of silanol (Si-OH) and siloxane (Si-O-Si) structural units of the organosilane matrix. The organic part of the hybrid organosilane structure is then visible in the region of the characteristic vibrations of the aromatic nuclei, i.e., 1400 to 1600 cm⁻¹ (series of valence vibrations of C=C and C-H structural units). The individual examples differ only in the signal intensity corresponding to the amount of a given component in the analyzed material.

In addition, the organosilane fibers prepared in Examples 1 to 3 were characterized by solid-state ²⁹Si and ¹³C nuclear magnetic resonance (ssNMR) - see Fig. 11, in which the ssNMR spectra of these fibers are a) a variant with a BTEBP: TEOS molar ratio in the sol of 25 mol. % : 75 mol.% according to Example 1, b) a variant with a molar ratio of BTEBP : TEOS in the sol 50 mol.% : 50 mol.% according to Example 2, c) a variant with a molar ratio of BTEBP : TEOS in the sol 75 mol.% : 25 mol.% according to Example 3. This method confirmed the successful formation of a spatial organosilane matrix. The formed complex organosilane structure contains various siloxane (Si-O-Si) units in different phases of condensation, which are denoted in the ssNMR spectra by the abbreviation Tⁿ (signal comes from a silicon atom which is single covalently bonded to a carbon atom, which corresponds to the precursor BTEBP) and Qⁿ (signal comes from a silicon atom with four bonds to the oxygen atom, which corresponds to TEOS), wherein n denotes the number of bridging oxygen atoms attached to Si atom. ²⁹Si NMR spectra indicate the presence of structural unit T¹ (-65 ppm), T² (-72 ppm), T³ (-79 ppm), Q¹ (-89 ppm), Q² (-95 ppm) and Q³ (- 102 ppm) in all the samples. The sample according to Example 1, i.e., with a molar ratio of BTEBP : TEOS 25 mol.% : 75 mol.%, i.e., with the highest proportion of TEOS, contains also Q⁴ groups (-109 ppm).

¹³C NMR spectra of all the examined samples confirm the presence of carbons from BTEBP aromatic nuclei. In addition, signals around 59 ppm, which represent polyfunctional -OCH₂- groups, and 18 ppm, which represent methyl (-CH₃) groups, were detected in these spectra. These signals thus refer to the presence of residual ethoxy groups (-OCH₂-CH₃), which was also confirmed by TGA-FTIR analysis.

It follows from these results that the increasing content of BTEBP in the sol leads to an increase in the amount of units T*ⁿ* in the final product. Notably, an increase in the content of T¹ and Q¹, Q² units was observed, indicating the formation of a less branched linear siloxane network.

### Example 4 - Preparation of microfibers from a sol with a molar ratio of BTEBP : TEOS 90 mol.% : 10 mol.%

A precursor based on bridged organosilane, namely 4,4'-bis(triethoxysilyl)-1,1'-biphenyl (BTEBP), a silicon-based alkoxide precursor, namely tetraethylorthosilicate (TEOS), and ethanol were homogeneously mixed at room temperature under constant stirring. The molar ratio of BTEBP and TEOS was 90 mol.% : 10 mol.% and the molar ratio *Alc,* i.e. the molar ratio of ethanol to the mixture of BTEBP and TEOS, was 75. Then, distilled water and concentrated HCl (36%) were added one by one to the thus prepared mixture under constant stirring, whereby the molar ratio *k,* i.e., the molar ratio of water to the mixture of BTEBP and TEOS, was 1.90, and the amount of HCl was such as to adjust the pH of the mixture thus obtained to pH ≈ 2. The mixture was continually stirred on IKA IKAMAG RCT basic magnetic stirrer at 350 rpm.

The mixture thus prepared, in which the addition of HCl had already started transformation reactions, was subsequently heated to a boiling point, which was 90 °C, and was maintained at this temperature for 5.5 hours. The sol formed was then concentrated by vacuum distillation with a water bath temperature of 70 °C and a vacuum of 15 mbar, whereby its viscosity after cooling to a temperature of 20 °C was 33 mPa.s.

The sol thus prepared was used to prepare microfibers by electrostatic spinning on the device Nanospider NS 1W500U (Elmarco s.r.o.) with the following parameters: voltage on the spinning electrode formed by a string with a diameter of 0.1 mm (CZ300345) was -28 kV, voltage on the collecting electrode +32 kV; distance between the spinning electrode and the collecting electrode 20 cm; relative air humidity 32 %; air temperature 24 °C (climatic conditions were regulated by a precisely controlled air conditioning system NS AC150/1000/2000, Elmarco s.r.o); sol dosing rate on the spinning electrode was 10 ml/h. The used base material (collector) which was arranged on the collecting electrode and on which the formed fibers were deposited, was polypropylene non-woven fabric type spunbond Pegatex S BICO, 15 g/m², with a width of 50 cm (PFNonwovens Czech s.r.o.), which was motionless during spinning. After 40 minutes of spinning, a 50 to 100 µm thick layer of organosilane fibers was prepared. This layer was then thermally stabilized in a drier at a temperature of 120 °C for a period of 2 hours.

The morphology and diameters of the organosilane fibers thus prepared were then monitored by scanning electron microscopy (SEM) - see Fig. 9, which shows an SEM image of these microfibers at a magnification of 5,000 times. Their diameters ranged from 480 to 4871 nm, with a mean value of 1980 nm; the fibers were compact. According to the results of TGA-FTIR analysis, these microfibers were thermally stable up to a temperarature of 375 °C.

### Example 5

Tables 1 and 2 show further examples of sols based on BTEBP and TEOS and their spinning conditions, for which the above conclusions were experimentally verified.

**Table 1 - composition and conditions of preparation of other sols**

| | **Molar ratio BTEBP : TEOS (mol.%)** | **Molar ratio *k*** | **Molar ratio *Alc*** | **Boiling time of sol (h) / bath temperature (°C)** | **Type of distillation** / **temperature (°C)** / **vacuum (mbar)** |
|---|---|---|---|---|---|
| **sol 1** | 95 : 5 | 1.85 | 80 | 5 / 90 | vacuum / 70 / 10 |
| **sol 2** | 60 : 40 | 1.98 | 55 | 6.5 / 90 | vacuum / 70 / 15 |
| **sol 3** | 40 : 60 | 2.05 | 40 | 6 / 90 | vacuum / 75 / 15 |
| **sol 4** | 30 : 70 | 2.10 | 35 | 5.5 / 90 | vacuum / 80 / 30 |
| **sol 5** | 10 : 90 | 2.25 | 25 | 7 / 90 | distillation / 120 |
| **sol 6** | 5 : 95 | 2.30 | 20 | 7.5 / 90 | distillation / 120 |
| **sol 7** | 0.1 : 99.9 | 2.40 | 17 | 7.5 / 90 | distillation / 120 |

**Table 2 - conditions of electrostatic spinning of other sols**

| | **Viscosity (mPa.s)** | **Spinning electrode** | **Spinning voltage (kV)** | **Distance between spinning and collecting electrode (cm)** | **Sol dosing rate (ml/h)** | **Fiber diameter (nm) / mean value (nm)** |
|---|---|---|---|---|---|---|
| **sol 1** | 35 | needle | 30 | 20 | 1.3 | 621 to 4264 / 2018 |
| **sol 2** | 46 | needle | 35 | 20 | 1.8 | 499 to 1805 / 1053 |
| **sol 3** | 52 | needle | 22 | 20 | 2.1 | 520 to 1430 / 915 |
| **sol 4** | 55 | needle | 20 | 20 | 2.3 | 492 to 1178 / 864 |
| **sol 5** | 57 | needle | 24 | 20 | 2.8 | 421 to 693 / 512 |
| **sol 6** | 57 | needle | 25 | 20 | 3.0 to 4.0 | 224 to 572 / 396 |
| **sol 7** | 60 | needle | 25 | 20 | 3.5 to 4.5 | 140 to 211 / 184 |

### Example 6 - Preparation of submicron fibers from a sol with a molar ratio of BTEBP : titanium tetraisopropoxide (IPTI) 20 mol.% : 80 mol.%

A precursor based on bridged organosilane, namely 4,4'-bis(triethoxysilyl)-1,1'-biphenyl (BTEBP), a titanium-based alkoxide precursor, namely titanium isopropoxide (IPTI), and isopropylalcohol were homogeneously mixed at room temperature under constant stirring. The molar ratio of BTEBP and IPTI was 20 mol.% : 80 mol.% and the molar ratio *Alc,* i.e. the molar ratio of isopropylalcohol to the mixture of BTEBP and IPTI (*Alc* = [IPA]/[BTEBP + IPTI]), was 25. Then a mixture of distilled water and concentrated HNO₃ (65%) was added to the mixture thus prepared under constant stirring, whereby the molar ratio *k,* i.e., the molar ratio of water to the mixture of BTEBP and IPTI (*k* = [H₂O]/[BTEBP + IPTI]), was 2, and the amount of HNO₃ was such as to adjust the pH of the mixture thus obtained to pH ≈ 2. The mixture was continually stirred on IKA IKAMAG RCT basic magnetic stirrer at 350 rpm.

The mixture thus prepared, in which the addition of HNO₃ had already started transformation reactions, was subsequently heated to a boiling point, which was 90 °C, and was maintained at this temperature for 4.5 hours. The sol formed was then concentrated by classical distillation with a water bath temperature of 110 °C, whereby its viscosity after cooling to a temperature of 20 °C was 57 mPa.s.

The sol thus prepared was used to prepare fibers by needle-based electrostatic spinning with the following parameters: electrostatic spinning voltage 20 kV; distance of the spinning needle from the collecting electrode 19 cm; rate of extrusion of the sol from the spinning needle 3 ml/h; ambient humidity 32 %; ambient temperature 20 °C. A black A4 paper with a weight of 80 g/m² was used as the base material (collector), which was arranged on the collecting electrode and on which the formed fibers were deposited. After 120 minutes of spinning, a 7 to 9 µm thick layer of submicron organosilane-titanium fibers was prepared. This layer was then thermally stabilized in a drier at a temperature of 120 °C for a period of 5 hours.

The morphology and diameters of the organosilane-titanium fibers thus prepared were then monitored by scanning electron microscopy (SEM). Their diameters ranged from 290 to 510 nm with a mean value of 352 nm; the fibers had an almost circular shape with a smooth surface, without defects. According to the results of TGA-FTIR analysis, these submicron fibers where thermally stable up to a temperature of approximately 550 °C. Their thermal stability is closely related to the amount of BTEBP in the hybrid organosilane matrix.

### Example 7 - Preparation of submicron fibers from a sol with a molar ratio of BTEBP : zirconium propoxide (PZrl) 20 mol.% : 80 mol.%

A precursor based on bridged organosilane, namely 4,4'-bis(triethoxysilyl)-1,1'-biphenyl (BTEBP), a zirconium-based alkoxide precursor, namely zirconium propoxide (PZrI), and isopropylalcohol were homogeneously mixed at room temperature under constant stirring. The molar ratio of BTEBP and PZrI was 20 mol.% : 80 mol.% and molar ratio *Alc,* i.e. the molar ratio of isopropylalcohol to the mixture of BTEBP and PZrI (*A*/*c* = [IPA]/[BTEBP + PZrl]) was 25. Then a mixture of distilled water and concentrated HNO3 (65%) was added to the mixture thus prepared under constant stirring, whereby the molar ratio *k*, i.e. the molar ratio of water to the mixture of BTEBP and PZrI (*k* = [H₂O]/[BTEBP + PZrI]) was 2, and the amount of HNO₃ was such as to adjust the pH of the mixture thus obtained to pH ≈ 2. The mixture was continually stirred on IKA IKAMAG RCT basic magnetic stirrer at 350 rpm.

The mixture thus prepared, in which the addition of HNO₃ had already started transformation reactions, was subsequently heated to a boiling point, which was 90 °C, and was maintained at this temperature for 4.5 hours. The sol formed was then concentrated by classical distillation with a water bath temperature of 110 °C, whereby its viscosity after cooling to a temperature of 20 °C was 60 mPa.s.

The sol thus prepared was used to prepare fibers by needle-based electrostatic spinning with the following parameters: electrostatic spinning voltage 20 kV; distance of the spinning needle from the collecting electrode 19 cm; rate of extrusion of the sol from the spinning needle 3 ml/h; ambient humidity 35 %; ambient temperature 20 °C. A black A4 paper with a weight of 80 g/m² was used as the base material (collector), which was arranged on the collecting electrode and on which the formed fibers were deposited. After 180 minutes of spinning, a 9 to 11 µm thick layer of submicron organosilane-zirconium fibers was prepared. This layer was then thermally stabilized in a drier at a temperature of 120 °C for a period of 5 hours.

The morphology and diameters of the organosilane-zirconium fibers thus prepared were then monitored by scanning electron microscopy (SEM). Their diameters ranged from 400 to 600 nm with a mean value of 475 nm; the fibers were compact, with a smooth surface and without pronounced defects. According to the results of TGA-FTIR analysis, these submicron fibers were thermally stable up to a temperature of about 450 °C.

### Example 8 - Preparation of submicron fibers from a sol with a molar ratio of BTEBP : TEOS : IPTI 30 mol.% : 50 mol.% : 20 mol.%

A precursor based on bridged organosilane, namely 4,4'-bis(triethoxysilyl)-1,1'-biphenyl (BTEBP), a silicon-based alkoxide precursor, namely tetraethylorthosilicate (TEOS), a titanium-based alkoxide precursor, namely titanium isopropoxide (IPTI), and isopropylalcohol were homogeneously mixed at room temperature under constant stirring. The molar ratio of BTEBP, TEOS and IPTI was 30 mol.% : 50 mol.% : 20 mol.% and the molar ratio *Alc,* i.e. the molar ratio of isopropylalcohol to the mixture of BTEBP, TEOS and IPTI (*Alc* = [IPA]/[BTEBP + TEOS + IPTI]), was 25. Then, distilled water and concentrated HNO₃ (65%) were added one by one to the thus prepared mixture under constant stirring, whereby the molar ratio *k,* i.e., the molar ratio of water to the mixture of BTEBP, TEOS and IPTI (*k* = [H₂O]/[BTEBP + TEOS + IPTI]), was 2.04, and the amount of HNO₃ was such as to adjust the pH of the mixture thus obtained to pH ≈ 2. The mixture was continually stirred on IKA IKAMAG RCT basic magnetic stirrer at 350 rpm.

The mixture thus prepared, in which the addition of HNO₃ had already started transformation reactions, was subsequently heated to a boiling point, which was 90 °C, and was maintained at this temperature for 5 hours. The sol formed was then concentrated by classical distillation with a water bath temperature of 110 °C, whereby its viscosity after cooling to a temperature of 20 °C was 59 mPa.s.

The sol thus prepared was used to prepare fibers by needle-based electrostatic spinning with the following parameters: electrostatic spinning voltage 25 kV; distance of the spinning needle from the collecting electrode 17 cm; rate of extrusion of the sol from the spinning needle 2.5 ml/h; ambient humidity 30 %; ambient temperature 20 °C. A black A4 paper with a weight of 80 g/m² was used as the base material (collector), which was arranged on the collecting electrode and on which the formed fibers were deposited. After 140 minutes of spinning, a 6 to 8 µm thick layer of submicron organosilane-silicon-titanium fibers was prepared. This layer was then thermally stabilized in a drier at a temperature of 120 °C for a period of 5 hours.

The morphology and diameters of the submicron fibers thus prepared were then monitored by scanning electron microscopy (SEM). Their diameters ranged from 380 to 600 nm with a mean value of 423 nm; the fibers had an almost circular cross-section and a smooth surface without defects. According to the results of TGA-FTIR analysis, these submicron fibers were thermally stable up to a temperature of approximately 550 °C. Their thermal stability is closely related to the amount of BTEBP in the hybrid organosilane matrix.

### Example 9 - Preparation of submicron fibers from a sol with a molar ratio of BTEBP : TEOS : PZrI 30 mol.% : 60 mol.% : 10 mol.%

A precursor based on bridged organosilane, namely 4,4'-bis(triethoxysilyl)-1,1'-biphenyl (BTEBP), a silicon-based alkoxide precursor, namely tetraethylorthosilicate (TEOS), a zirconium-based alkoxide precursor, namely zirconium propoxide (PZrI), and isopropylalcohol were homogeneously mixed at room temperature under constant stirring. The molar ratio of BTEBP, TEOS and PZrI was 30 mol.% : 60 mol.% : 10 mol.% and the molar ratio *Alc,* i.e., the molar ratio of isopropylalcohol to the mixture of BTEBP, TEOS and PZrI (*Alc* = [IPA]/[BTEBP +TEOS + PZrI]), was 31. Then, distilled water and concentrated HNO₃ (65%) were added one by one to the thus prepared mixture under constant stirring, whereby the molar ratio *k*, i.e., the molar ratio of water to the mixture of BTEBP, TEOS and PZrI (*k* = [H₂O]/[BTEBP +TEOS + PZrI]), was 2.03, and the amount of HNO₃ was such as to adjust the pH of the mixture thus obtained to pH ≈ 2. The mixture was continually stirred on IKA IKAMAG RCT basic magnetic stirrer at 350 rpm.

The mixture thus prepared, in which the addition of HNO₃ had already started transformation reactions, was subsequently heated to a boiling point, which was 90 °C and was maintained at this temperature for 4.5 hours. The sol formed was then concentrated by classical distillation with a water bath temperature of 115 °C, whereby its viscosity after cooling to a temperature of 20 °C was 60 mPa.s.

The sol thus prepared was used to prepare fibers by needle-based electrostatic spinning with the following parameters: electrostatic spinning voltage 28 kV; distance of the spinning needle from the collecting electrode 19 cm; rate of extrusion of the sol from the spinning needle 3 ml/h; ambient humidity 32 %; ambient temperature 20 °C. A black A4 paper with a weight of 80 g/m² was used as the base material (collector), which was arranged on the collecting electrode and on which the formed fibers were deposited. After 160 minutes of spinning, an 8 to 10 µm thick layer of submicron organosilane-silicon-zirconium fibers was prepared. This layer was then thermally stabilized in a drier at a temperature of 120 °C for a period of 5 hours.

The morphology and diameters of the organosilane-silicon-zirconium fibers thus prepared were then monitored by scanning electron microscopy (SEM). Their diameters ranged from 370 to 590 nm with a mean value of 467 nm; the fibers were compact, with a smooth surface and without defects. According to the results of TGA-FTIR analysis, these submicron fibers had thermal stability up to a temperature of approximately 550 °C. Their thermal stability is closely related to the amount of BTEBP in the hybrid matrix.

### Example 10 - Preparation of microfibres from a sol without alkoxide

A precursor based on bridged organosilane, namely 4,4'-bis(triethoxysilyl)-1,1'-biphenyl (BTEBP), was mixed homogeneously with ethanol at room temperature under constant stirring, whereby the molar ratio *Alc,* i.e., the molar ratio of ethanol to BTEBP (*Alc* = [EtOH]/[BTEBP]), was 95. Then, distilled water and concentrated HCl (36%) were added one by one to the thus prepared mixture under constant stirring, whereby the molar ratio *k,* i.e., the molar ratio of water to BTEBP (*k* = [H₂O]/[BTEBP]), was 1.80, and the amount of HCl was such as to adjust the pH of the mixture thus obtained to pH ≈ 2. The mixture was continually stirred on IKA IKAMAG RCT basic magnetic stirrer at 350 rpm.

The mixture thus prepared, in which the addition of HCl had already started transformation reactions, was subsequently heated to a boiling point, which was 90 °C, and was maintained at this temperature for 4.5 hours. The sol formed was then concentrated by vacuum distillation with a water bath temperature of 70 °C and a vacuum of 20 mbar, whereby its viscosity after cooling to a temperature of 20 °C was 32 mPa.s.

The sol thus prepared was used to prepare fibers by electrostatic spinning on the device Nanospider NS 1W500U (Elmarco s.r.o.) with the following parameters: voltage on the spinning electrode formed by a string with a diameter of 0.2 mm (CZ300345) -25 kV, voltage on the collecting electrode +30 kV; distance between the spinning electrode and the collecting electrode 20 cm; relative humidity 32 %; air temperature 24 °C (climatic conditions were regulated by a precisely controlled air conditioning system NS AC150/1000/2000, Elmarco s.r.o); sol dosing rate on the spinning electrode was 10 ml/h. The used base material (collector) which was arranged on the collecting electrode and on which the formed fibers were deposited, was polypropylene non-woven fabric of spunbond type Pegatex S BICO, 15 g/m², with a width of 50 cm (PFNonwovens Czech s.r.o.), which was motionless during spinning. After 30 minutes of spinning, a 12 to 15 µm thick layer of organosilane microfibers was prepared. This layer was subsequently stabilized in a drier at a temperature of 120 °C for a period of 2 hours.

The morphology and diameters of the organosilane fibers thus prepared were then monitored by scanning electron microscopy (SEM). Their diameters ranged from 658 to 5100 nm with a mean value of 2040 nm; the fibers were compact, with a smooth surface without defects. According to the results of TGA-FTIR analysis, these submicron fibers had thermal stability up to a temperature of approximately 370 °C.

### Example 11 - Preparation of submicron fibers from sol with a molar ratio of N,N'-bis(3-(triethoxysilyl)-propyl)oxamide (OBA) : TEOS 50 mol.% : 50 mol.%

A precursor based on bridged organosilane, namely *N*,*N*'-bis(3-(triethoxysilyl)-propyl)oxamide (OBA), a silicon alkoxide, namely tetraethylorthosilicate (TEOS), with a molar ratio of 50 mol.% : 50 mol.%, and ethanol were mixed on a molecular level at room temperature, whereby the molar ratio *Alc,* i.e. the molar ratio of ethanol to the mixture of OBA and TEOS (*Alc* = [EtOH]/[OBA + TEOS]), was 65. Then, distilled water and concentrated HCl (36%) were added one by one in this order to the thus prepared solution under constant stirring, whereby the molar ratio *k*, i.e. the molar ratio of water to the mixture of OBA and TEOS (*k* = [H₂O]/[OBA + TEOS]) was 2.0, and the amount of HCl was such as to adjust the pH of the solution thus obtained to pH ≈ 2. The mixture was continually stirred on IKA IKAMAG RCT basic magnetic stirrer at 350 rpm.

The mixture thus prepared, in which the addition of HCl had already started a transformation reaction, was subsequently heated to a boiling point, whoc was 85 °C, and was maintained at this temperature for 5 hours. The sol formed was then concentrated by vacuum distillation with a water bath temperature of 70 °C and a vacuum of 30 mbar, whereby its viscosity after cooling to a temperature of 20 °C was 55 mPa.s.

The sol thus prepared was used for the preparation of submicron fibers by needle-based electrostatic spinning with the following parameters: electrostatic spinning voltage 25 kV; distance of the spinning needle from the collecting electrode 19 cm; rate of extrusion of the sol from the spinning needle 1 ml/h; ambient humidity 30 %; ambient temperature 20 °C. A black A4 paper with a weight of 80 g/m² was used as the base material (collector), which was arranged on the collecting electrode and on which the formed fibers were deposited. After 90 minutes of spinning, a 6 to 8 µm thick layer of submicron organosilane microfibers was prepared. This layer was subsequently stabilized only at room temperature for a period of 24 hours.

The morphology and diameters of the submicron organosilane fibers thus prepared were then monitored by scanning electron microscopy (SEM). The diameters of the thus prepared submicron fibers ranged between 430 and 1386 nm with a mean value of 864 nm. According to the results of TGA-FTIR analysis, these submicron fibers had thermal stability up to a temperature of 280 °C.

### Example 12 - Preparation of microfibers from a sol with a molar ratio of bis(3-(triethoxysilyl)propyl)pyridin-2,6-dikarboxamid (BTEPDA) : TEOS 50 mol.% : 50 mol.%

A precursor based on bridged organosilane, namely bis(3-(triethoxysilyl)propyl)pyridine-2,6-dicarboxamide (BTEPDA), a silicon alkoxide, in particular tetraethylorthosilicate (TEOS), in a molar ratio of 50 mol.%: 50 mol.%, and ethanol were mixed on a molecular level at room temperature, whereby the molar ratio *Alc,* i.e., the molar ratio of ethanol to the mixture of BTEPDA and TEOS (*Alc* = [EtOH]/[ BTEPDA + TEOS]), was 40. Then, distilled water and concentrated HCl (36%) were added one by one in this order to the thus prepared solution under constant stirring, whereby the molar ratio *k,* i.e., the molar ratio of water to the mixture of BTEPDA and TEOS (*k* = [H₂O]/[ BTEPDA + TEOS]), was 2.1, and the amount of HCl was such as to adjust the pH of the solution thus obtained to pH ≈ 2. The mixture was continually stirred on IKA IKAMAG RCT basic magnetic stirrerr at 350 rpm.

The mixture thus prepared, in which the addition of HCl had already started transformation reactions, was subsequently heated to a boiling point, which was 90 °C and was maintanned at this temperature for 5 hours. The sol formed was then concentrated by vacuum distillation at a water bath temperature of 70 °C and a vacuum of 30 mbar, whereby its viscosity after cooling to a temperature of 20 °C was 60 mPa.s.

The sol thus prepared was used to prepare microfibers by needle-based electrostatic spinning with the following parameters: electrostatic spinning voltage 23 kV; distance of the spinning needle from the collecting electrode 19 cm; rate of extrusion of the sol from the spinning needle 1 ml/h; ambient humidity 32 %; ambient temperature 20 °C. A black A4 paper with a weight of 80 g/m² was used as the base material (collector), which was arranged on the collecting electrode and on which the formed fibers were deposited. After 120 minutes of spinning, a 5 to 7 µm thick layer of organosilane microfibers was prepared. This layer was subsequently stabilized only at room temperature for a period of 24 hours.

The morphology and diameters of the organosilane fibers thus prepared were then monitored by scanning electron microscopy (SEM). The diameters of the prepared microfibers ranged from 760 to 2230 nm with a mean value of 1067 nm. According to the results of TGA-FTIR analysis, these microfibers had thermal stability up to a temperature of 500 °C.

The fibers prepared by the electrostatic spinning of sol according to the invention exhibit high cytocompatibility in all cases and therefore appear to be potentially interesting carriers of different cell types for tissue engineering in medicine. Specifically, this relates to the field of reconstruction of nervous, cardiac, bone or skin tissues. Furthermore, they exhibit fluorescence at different wavelengths. Based on this, their application in the fields of optoelectronics, sensors, filtration, catalysis, or power equipment is conceivable. In addition, an equally important property is also their potential conductivity, which can optionally be improved by the addition of another precursor/other precursors based on bridged organosilane which contains/contain electron-rich organic molecules (linkers).

## Claims

1. A method for the preparation of a sol for the preparation of hybrid organosilane fibers by electrostatic spinning **characterized in that** first at least one precursor based on bridged organosilane with a structure (RO)₃-Si-organic molecule-Si-(OR)₃), where (-OR) represents methoxy, ethoxy, isopropoxy, or butoxy groups, and the organic molecule can have any of the following structures:
- an aliphatic structure containing single bonds;
- an aliphatic structure containing multiple bonds;
- a cyclic structure;
- a heterocyclic structure containing at least one of the following heteroatoms S, N, P or O in its molecule;
- an aromatic structure, with at least one and more aromatic nuclei;
- a structure combining at least two of the above structures,
is mixed with an alcohol-based polar solvent, whereby the molar ratio *Alc* of the alcohol-based polar solvent to the precursor/precursors based on bridged organosilane is at least 90, whereupon the mixture thus prepared is homogenized and, after its homogenization, distilled or demineralized water is added to it, whereby the molar ratio *k,* i.e. the molar ratio of water to precursor/precursors based on bridged organosilane is 1.8 to 2.4, wherein together with or after water, at least one strong inorganic mineral acid is added to the mixture, which adjusts the pH of this mixture to pH ≈ 2, then the mixture thus prepared is heated to the boiling point and is maintained at this temperature for 4.5 to 7.5 hours, whereby hydrolysis of alkoxy groups (=Si-OR) in the structure of the precursor/precursors based on bridged organosilane occurs, in which these groups are transformed into silanol groups (=Si-OH), whereupon these silanol groups polycondensate (=Si-O-Si=, polysiloxane bond), whereby from the liquid mixture, a sol consisting of linear and lowly branched organosilane macromolecular structures is formed, and the sol thus prepared is then concentrated by vacuum distillation at a temperature of 70 to 80 °C and a vacuum of 10 to 30 mbar, by which is its viscosity adjusted to 30 to 60 mPa.s at a temperature of 20 °C and a sol formed by a linear, lowly branched macromolecular organosilane matrix which is filled with molecules of alcohol-based polar solvent, water and inorganic mineral acid is prepared, the sol being spinnable by electrostatic spinning.

2. The method according to claim 1, **characterized in that** distilled or demineralized water and at least one strong inorganic mineral acid is added to the mixture of at least one precursor based on bridged organosilane and an alcohol-based polar solvent in the form of a mixture.

3. The method according to claim 1 or 2, **characterized in that** ethanol or isopropylalcohol is used as an alcohol-based polar solvent.

4. The method according to claim 1 or 2, **characterized in that** 4,4'-bis(triethoxysilyl)-1,1'-biphenyl is used as a precursor based on bridged organosilane.

5. The method according to claim 1 or 2, **characterized in that** hydrochloric acid (HCl), nitric acid (HNO₃) or sulphuric acid (H₂SO₄) is used as a strong inorganic mineral acid.

6. The method for preparing sol for the preparation of hybrid organosilane fibers by electrostatic spinning **characterized in that** first at least one precursor based on bridged organosilane with a structure (RO)₃-Si-organic molecule-Si-(OR)₃, where (-OR) represents methoxy, ethoxy, isopropoxy, or butoxy groups, and the organic molecule has one of the following structures:
- an aliphatic structure containing single bonds;
- an aliphatic structure containing multiple bonds;
- a cyclic structure;
- a heterocyclic structure containing at least one of the following heteroatoms S, N, P or O in its molecule;
- an aromatic structure, with at least one and more aromatic nuclei;
- a structure combining at least two of these structures,
is mixed with at least one silicon-based alkoxide precursor and/or titanium-based alkoxide precursor and/or zirconium-based alkoxide precursor, whereby a molar ratio of the precursor/precursors based on bridged organosilane and the alkoxide precursor/precursors is 99,9 mol.% : 0,1 mol.% to 0,1 mol.% to 99,9 mol.%, and with an alcohol-based polar solvent, whereby the molar ratio *Alc* of the alcohol-based polar solvent to the mixture of the precursor/precursors based on bridged organosilane and the alkoxide precursor/precursors is 17 to 90, then the mixture thus prepared is homogenized and, after its homogenization, distilled or demineralized water is added to it, whereby the molar ratio k, i.e. the molar ratio of water to the mixture of the precursor/precursors based on bridged organosilane and the alkoxide precursor/precursors is 1.8 to 2.4, whereby together with water or after the addition of water, at least one strong inorganic mineral acid is added to this mixture, which adjusts the pH of this mixture to pH ≈ 2, afterwards the mixture thus obtained is heated to a boiling temperature and is maintained at it for 4.5 to 7.5 hours, whereby hydrolysis of the alkoxy groups (=Si-OR) in the structure of the precursor/precursors based on bridged organosilane and the alkoxide precursor/precursors occurs, and during the hydrolysis these groups are transformed into silanol groups (=Si-OH), whereupon these silanol groups polycondensate (=Si-O-Si=, polysiloxane bond), whereby from the liquid mixture, a sol consisting of linear and lowly branched organosilane macromolecular structures is formed, and the sol thus prepared is then concentrated by distillation at a temperature of 110 to 120 °C or by vacuum distillation at a temperature of 70 to 80 °C and a vacuum of 10 to 30 mbar, by which is its viscosity adjusted to 30 to 60 mPa.s at a temperature of 20 °C and a sol formed by a linear, lowly branched macromolecular organosilane matrix which is filled with the molecules of the alcohol-based polar solvent, water and inorganic mineral acid is prepared, the sol being spinnable by electrostatic spinning.

7. The method according to claim 6, **characterized in that** the presursor|/precursors based on bridged organosilane and the alkoxide presursor/precursors are mixed in a molar ratio of 70 mol.% : 30 mol.% to 99.9 mol.% : 0,1 mol.%.

8. The method according to claim 6, **characterized in that** distilled or demineralized water and at least one strong inorganic mineral acidare added to the mixture of the at least one precurson based on bridged organosilaneand at least one alkoxide precursor and the alcohol-based polar solvent in the form of a mixture.

9. The method according to claim 6 or 8, **characterized in that** ethanol or isopropyl alcohol is used as an alcohol-based polar solvent.

10. The method according to claim 6 or 8, **characterized in that** 4,4'-bis(triethoxysilyl)-1,1'-biphenyl is used as a precursor based on bridged organosilane.

11. The method according to claim 6 or 8, **characterized in that** tetraethylorthosilicate (TEOS), tetramethylorthosilicate (TMOS), titanium isopropoxide (IPTI), tetrabutyl orthotitanate, zirconium ethoxide or zirconium propoxide (PZrI) is used as an alkoxide precursor.

12. The method according to claim 6 or 8, **characterized in that** hydrochloric acid (HCl), nitric acid (HNO₃) or sulphuric acid (H₂SO₄) is used as a strong inorganic mineral acid.

## Patentansprüche

1. Verfahren zur Vorbereitung eines Sols zur Vorbereitung von hybriden Organosilanfasern durch elektrostatisches Verspinnen, **dadurch gekennzeichnet, dass** zuerst mindestens ein Präkursor auf Basis eines überbrückten Organosilans mit einer Struktur (RO)₃-Si-organisches Molekül-Si-(OR)₃) vermischt wird, wo (-OR) eine Methoxy-, Ethoxy-, Isopropoxy- oder Butoxygruppe darstellt, und organisches Molekül eine der folgenden Strukturen aufweist:
- aliphatische Einfachbindungen aufweisende Struktur;
- aliphatische Mehrfachbindungen aufweisende Struktur;
- zyklische Struktur;
- heterozyklische Struktur, die in ihrem Molekül mindestens eines der folgenden Heteroatome S, N, P oder O aufweist;
- aromatische Struktur, mit mindestens einem oder mehreren aromatischen Kernen;
- mindestens zwei dieser Strukturen kombinierende Struktur,
mit einem polaren Lösemittel auf Alkoholbasis, wobei das Molarverhältnis *Alc* des polaren Lösemittels auf Alkoholbasis gegenüber dem Präkursor/den Präkursoren auf Basis des überbrückten Organosilans mindestens 90 ist, die auf diese Weise gebildete Mischung anschließend homogenisiert wird und nach ihrer Homogenisierung darin destilliertes oder vollentsalztes Wasser zugegeben wird, wobei das Molarverhältnis k, d.h. Molarverhältnis des Wassers gegenüber dem Präkursor/den Präkursoren auf Basis des überbrückten Organosilans 1,8 bis 2,4 ist, wobei gemeinsam mit Wasser oder nach ihm dieser Mischung mindestens eine starke anorganische Mineralsäure zugegeben wird, die den pH-Wert dieser Mischung auf pH ≈ 2 aufbereitet, die auf diese Weise vorbereitete Mischung anschließend auf die Siedetemperatur erwärmt wird und auf dieser 4,5 bis 7,5 Stunden verharrt, wobei es zur Hydrolyse von Alkoxy-Gruppen (=Si-OR) in der Struktur des Präkursors/der Präkursoren auf Basis des überbrückten Organosilans kommt, bei der diese Gruppen zu Silanolgruppen (=Si-OH) transformiert werden, wonach diese Silanolgruppen (=Si-O-Si=, Polysiloxan-Bindung) polykondensieren, wobei aus der flüssigen Mischung ein Sol gebildet wird, das durch lineare und niedrig verzweigte makromolekulare Organosilanstrukturen gebildet wird, und das so vorbereitete Sol anschließend durch eine Vakuumdestillation bei der Temperatur von 70 bis 80 °C und dem Unterdruck von 10 bis 30 mbar verdichtet wird, wodurch seine Viskosität auf 30 bis 60 mPa.s bei der Temperatur von 20 °C aufbereitet wird und das durch lineare, niedrig verzweigte makromolekulare Organosilanmatrize gebildete Sol vorbereitet wird, die mit Molekülen des polaren Lösemittels auf Basis Alkohol, Wasser und anorganische Mineralsäure ausgefüllt ist, das durch elektrostatisches Verspinnen verspinnbar ist.

2. Verfahren nach dem Anspruch 1, **dadurch gekennzeichnet, dass** das destillierte oder vollentsalzte Wasser und mindestens eine starke anorganische Mineralsäure der Mischung von mindestens einem Präkursor auf Basis des überbrückten Organosilans und dem polaren Lösemittel auf Alkoholbasis in der Form einer Mischung zugegeben werden.

3. Verfahren nach dem Anspruch 1 oder 2, **dadurch gekennzeichnet, dass** als polares Lösemittel auf Alkoholbasis Ethanol oder Isopropylalkohol verwendet wird.

4. Verfahren nach dem Anspruch 1 oder 2, **dadurch gekennzeichnet, dass** als Präkursor auf Basis des überbrückten Organosilans 4,4'-bis(Triethoxysilyl)-1,1'-Biphenyl verwendet wird.

5. Verfahren nach dem Anspruch 1 oder 2, **dadurch gekennzeichnet, dass** als starke anorganische Mineralsäure Chlorwasserstoffsäure (HCl), Salpetersäure (HNOs) oder Schwefelsäure (H₂SO₄) verwendet werden.

6. Verfahren zur Vorbereitung eines Sols zur Vorbereitung von hybriden Organosilanfasern durch elektrostatisches Verspinnen, **dadurch gekennzeichnet, dass** zuerst mindestens ein Präkursor auf Basis eines überbrückten Organosilans mit einer Struktur (RO)₃-Si-organisches Molekül-Si-(OR)₃ vermischt wird, wo (-OR) eine Methoxy-, Ethoxy-, Isopropoxy- oder Butoxy-Gruppe darstellt, und das organische Molekül eine der folgenden Strukturen aufweist:
- aliphatische Einfachbindungen aufweisende Struktur;
- aliphatische Mehrfachbindungen aufweisende Struktur;
- zyklische Struktur;
- heterozyklische Struktur, die in ihrem Molekül mindestens eines der folgenden Heteroatome S, N, P oder O aufweist;
- aromatische Struktur, mit mindestens einem oder mehreren aromatischen Kernen;
- mindestens zwei dieser Strukturen kombinierende Struktur,
mit mindestens einem Alkoxidpräkursor auf Basis Silizium und/oder auf Basis Titan und/oder auf Basis Zirkon, wobei das Molarverhältnis des Präkursors/der Präkursoren auf Basis des überbrückten Organosilans und des Alkoxidpräkursors/der Alkoxidpräkursoren 99,9 mol.% : 0,1 mol.% bis 0,1 mol.% : 99,9 mol.% ist, und mit dem polaren Lösemittel auf Alkoholbasis, wobei das Molarverhältnis *Alc* des polaren Lösemittels auf Alkoholbasis gegenüber der Mischung des Präkursors/der Präkursoren auf Basis des überbrückten Organosilans und des Alkoxidpräkursors/der Alkoxidpräkursoren 17 bis 90 ist, die auf diese Weise gebildete Mischung anschließend homogenisiert wird und nach ihrer Homogenisierung darin destilliertes oder vollentsalztes Wasser zugegeben wird, wobei das Molarverhältnis k, d.h. Molarverhältnis des Wassers gegenüber der Mischung des Präkursors/der Präkursoren auf Basis des überbrückten Organosilans und des Alkoxidpräkursors/der Alkoxidpräkursoren 1,8 bis 2,4 ist, wobei gemeinsam mit Wasser oder nach ihm dieser Mischung mindestens eine starke anorganische Mineralsäure zugegeben wird, die den pH-Wert dieser Mischung auf pH ≈ 2 aufbereitet, die auf diese Weise vorbereitete Mischung anschließend auf die Siedetemperatur erwärmt wird und auf dieser 4,5 bis 7,5 Stunden verharrt, wobei es zur Hydrolyse von Alkoxy-Gruppen (=Si-OR) in der Struktur des Präkursors/der Präkursoren auf Basis des überbrückten Organosilans und des Alkoxidpräkursors/der Alkoxidpräkursoren kommt, bei der diese Gruppen zu Silanolgruppen (=Si-OH) transformiert werden, wonach diese Silanolgruppen (=Si-O-Si=, Polysiloxan-Bindung) polykondensieren, wobei aus der flüssigen Mischung ein Sol gebildet wird, das durch lineare und niedrig verzweigte makromolekulare Organosilanstrukturen gebildet wird, und das so vorbereitete Sol anschließend durch eine klassische Destillation bei der Temperatur von 110 bis 120 °C oder eine Vakuumdestillation bei der Temperatur von 70 bis 80 °C und dem Unterdruck von 10 bis 30 mbar verdichtet wird, wodurch seine Viskosität auf 30 bis 60 mPa.s bei der Temperatur von 20 °C aufbereitet wird und das durch lineare, niedrig verzweigte makromolekulare Organosilanmatrize gebildete Sol vorbereitet wird, die mit Molekülen des polaren Lösemittels auf Basis Alkohol, Wasser und anorganische Mineralsäure ausgefüllt ist, das durch elektrostatisches Verspinnen verspinnbar ist.

7. Verfahren nach dem Anspruch 6, **dadurch gekennzeichnet, dass** der Präkursor/die Präkursoren auf Basis des überbrückten Organosilans und der Alkoxidpräkursor/die Alkoxidpräkursoren im Molarverhältnis von 70 mol.% : 30 mol.% bis 99,9 mol.% : 0,1mol.% vermischt werden.

8. Verfahren nach dem Anspruch 6, **dadurch gekennzeichnet, dass** das destillierte oder vollentsalzte Wasser und mindestens eine starke anorganische Mineralsäure der Mischung von mindestens einem Präkursor auf Basis des überbrückten Organosilans, mindestens einem Alkoxidpräkursor und dem polaren Lösemittel auf Alkoholbasis in der Form einer Mischung zugegeben werden.

9. Verfahren nach dem Anspruch 6 oder 8, **dadurch gekennzeichnet, dass** als polares Lösemittel auf Alkoholbasis Ethanol oder Isopropylalkohol verwendet werden.

10. Verfahren nach dem Anspruch 6 oder 8, **dadurch gekennzeichnet, dass** als Präkursor auf Basis des überbrückten Organosilans 4,4'-bis(Triethoxysilyl)-1,1'-Biphenyl verwendet wird.

11. Verfahren nach dem Anspruch 6 oder 8, **dadurch gekennzeichnet, dass** als Alkoxidpräkursor Tetraethylorthosilikat (TEOS), Tetramethylorthosilikat (TMOS), Titanisopropoxid (IPTI), Tetrabutyl Orthotitanat, Zirkonethoxid oder Zirkonpropoxid (PZrl) verwendet werden.

12. Verfahren nach dem Anspruch 6 oder 8, **dadurch gekennzeichnet, dass** als starke anorganische Mineralsäure Chlorwasserstoffsäure (HCl), Salpetersäure (HNOs) oder Schwefelsäure (H₂SO₄) verwendet werden.

## Revendications

1. Procédé de préparation d'un sol pour la préparation de fibres d'organosilanes hybrides par électrofilage, **caractérisé en ce qu'**au moins un précurseur à base d'un organosilane ponté est d'abord mélangé avec la structure (RO)₃-molécule organique-Si-(OR)₃), où l'(-OR) représente un groupe méthoxy, éthoxy, isopropoxy ou butoxy, et la molécule organique a l'une des structures suivantes :
- structure aliphatique contenant des liaisons simples ;
- structure aliphatique contenant des liaisons multiples ;
- structure cyclique ;
- structure hétérocyclique contenant dans sa molécule au moins un des hétéroatomes suivants : S, N, P ou O ;
- structure aromatique avec un ou plusieurs noyaux aromatiques ;
- structure combinant au moins deux de ces structures,
avec un solvant polaire à base d'alcool, où le rapport molaire entre l'*Alc* du solvant polaire à base d'alcool et le(s) précurseur(s) à base d'organosilane ponté est d'au moins 90, après quoi le mélange ainsi formé est homogénéisé et de l'eau distillée ou déminéralisée y est ajoutée après homogénéisation, tandis que le rapport molaire k, c'est-à-dire le rapport molaire entre l'eau et le(s) précurseur(s) à base d'organosilane ponté, est compris entre 1,8 et 2,4, et au moins un acide minéral inorganique fort est ajouté au mélange en même temps que l'eau ou après pour ajuster le pH du mélange à pH ≈ 2, puis le mélange ainsi préparé est chauffé jusqu'au point d'ébullition et y reste pendant 4,5 à 7,5 heures, en hydrolysant les groupes alcoxy (=Si-OR) dans la structure du (des) précurseur(s) à base d'organosilane ponté, ces groupes sont transformés en groupes silanol (=Si-OH). Ces groupes de silanol ensuite « polycondensent » (=Si-O-Si=, liaison polysiloxane), le mélange liquide forme un sol constitué de structures macromoléculaires d'organosilanes linéaires, faiblement ramifiées, et le sol ainsi préparé est ensuite concentré par distillation sous vide à une température de 70 à 80 °C, avec dépression de 10 à 30 mbar, ce qui permet d'ajuster sa viscosité à 30 à 60 mPa.s avec 20 °C de température et on prépare sol formé par une matrice d'organosilane macromoléculaire linéaire à faible ramification, qui est remplie de molécules de solvant polaire à base d'alcool, d'eau et d'un acide minéral inorganique, qui permet une filature par voie électrostatique.

2. Procédé selon la revendication 1, **caractérisé en ce que** l'eau distillée ou déminéralisée et au moins un acide minéral inorganique fort sont ajoutés sous forme d'un mélange à un mélange de précurseur à base d'organosilane ponté et du solvant polaire à base d'alcool.

3. Procédé selon la revendication 1 ou 2, **caractérisé en ce que** l'éthanol ou l'alcool isopropylique servent de solvants polaires à base d'alcool.

4. Procédé selon la revendication 1 ou 2, **caractérisé en ce que** le 4,4'-bis(triéthoxysilyl)-1,1'-biphényle est utilisé comme précurseur à base d'organosilane ponté.

5. Procédé selon la revendication 1 ou 2, **caractérisé en ce que** l'acide chlorhydrique (HCl), l'acide nitrique (HNOs) ou l'acide sulfurique (H₂SO₄) sont utilisés comme acide minéral inorganique fort.

6. Procédé de préparation d'un sol pour préparation de fibres d'organosilanes hybrides par électrofilage, **caractérisé en ce qu'**au moins un précurseur à base d'organosilane ponté est d'abord mélangé avec la structure (RO)₃-Si-molécule organique-Si-(OR)₃, où (-OR) représente un groupe méthoxy, éthoxy, isopropoxy ou butoxy et la molécule organique a l'une des structures suivantes :
- structure aliphatique contenant des liaisons simples ;
- structure aliphatique contenant des liaisons multiples ;
- structure cyclique ;
- structure hétérocyclique contenant dans sa molécule au moins un des hétéroatomes suivants : S, N, P ou O ;
- structure aromatique avec un ou plusieurs noyaux aromatiques ;
- structure combinant au moins deux de ces structures,
avec au moins un précurseur d'alcoxyde à base de silicium et/ou de titane et/ou de zirconium, tandis que le rapport molaire entre le(s) précurseur(s) à base d'organosilane ponté et le(s) précurseur(s) d'alcoxyde est de 99,9 % mol : 0,1 % mol à 0,1 % mol : 99,9 % mol, et avec un solvant polaire à base d'alcool, où le rapport molaire entre l'*Alc* du solvant polaire à base d'alcool et le mélange du (des) précurseur(s) à base d'organosilane ponté et du (des) précurseur(s) à base d'alcoxyde est de 17 à 90, puis le mélange ainsi formé est homogénéisé, et après homogénéisation, de l'eau distillée ou déminéralisée y est ajoutée, tandis que le rapport molaire *k,* c'est-à-dire le rapport molaire entre l'eau et le mélange de précurseur(s) ponté(s) à base d'organosilane ponté et de précurseur(s) d'alcoxyde est compris entre 1,8 et 2,4, et au moins un acide minéral inorganique fort est ajouté au mélange avec ou après l'eau pour ajuster le pH du mélange à pH ≈ 2, puis le mélange ainsi préparé est chauffé jusqu'au point d'ébullition et y reste pendant 4,5 à 7,5 heures, en hydrolysant les groupes alcoxy (=Si-OR) dans la structure du (des) précurseur(s) à base d'organosilane ponté et le(s) précurseur(s) d'alcoxyde, ces groupes sont transformés en groupes silanol (=Si-OH), après quoi ces groupes silanol « polycondensent » (=Si-O-Si=, liaison polysiloxane), le mélange liquide formant un sol constitué de structures macromoléculaires d'organosilane linéaires et faiblement ramifiées, et le sol ainsi préparé est ensuite concentré par distillation classique à une température de 110 à 120 °C ou par distillation sous vide à une température de 70 à 80 °C avec dépression de de 10 à 30 mbar, ce qui permet d'ajuster sa viscosité à 30 à 60 mPa.s à 20 °C de température pour préparer un sol constitué d'une matrice d'organosilane macromoléculaire linéaire à faible ramification, remplie de molécules de solvant polaire à base d'alcool, d'eau et d'acide minéral inorganique, qui permet une filature par voie électrostatique.

7. Procédé selon la revendication 6, **caractérisé en ce que** le(s) précurseur(s) à base d'organosilane ponté et le(s) précurseur(s) à base d'alcoxyde sont mélangés dans un rapport molaire de 70 % mol : 30 % mol à 99,9 % mol : 0,1 % mol.

8. Procédé selon la revendication 6, **caractérisé en ce que** l'eau distillée ou déminéralisée et au moins un acide minéral inorganique fort sont ajoutés sous forme de mélange au mélange d'au moins un précurseur à base d'organosilane ponté, d'au moins un précurseur d'alcoxyde et d'un solvant polaire à base d'alcool.

9. Procédé selon la revendication 6 ou 8, **caractérisé en ce que** l'éthanol ou l'alcool isopropylique sont utilisés comme solvant polaire à base d'alcool.

10. Procédé selon la revendication 6 ou 8, **caractérisé en ce que** le 4,4'-bis(triéthoxysilyl)-1,1'-biphényle est utilisé comme précurseur à base d'organosilane ponté.

11. Procédé selon la revendication 6 ou 8, **caractérisé en ce que** le tétraéthylorthosilicate (TEOS), le tétraméthylorthosilicate (TMOS), l'isopropoxytitane (IPTI), l'orthotitanate de tétrabutyle, l'éthoxyde de zirconium ou le propoxyde de zirconium (PZrl) sont utilisés comme précurseur d'alcoxyde.

12. Procédé selon la revendication 6 ou 8, **caractérisé en ce que** l'acide chlorhydrique (HCl), l'acide nitrique (HNOs) ou l'acide sulfurique (H₂SO₄) sont utilisés comme acide minéral inorganique fort.
